# EUROPEAN PATENT APPLICATION

(11) **EP 3 416 426 A1**
(43) Date of publication of application: **19.12.2018**
(21) Application number: 16896004.5
(22) Date of filing: 31.03.2016
(51) Int. Cl.: H04W 48/08, H04L 1/00

(54) **METHOD FOR TRANSMITTING INFORMATION ABOUT TRANSMISSION MODES, NETWORK DEVICE, TERMINAL DEVICE, AND SYSTEM**

(71) Applicant: Huawei Technologies Co., Ltd., Longgang District Shenzhen, Guangdong 518129 (CN)
(72) Inventor: LYU, Yongxia, Shenzhen Guangdong 518129 (CN); WU, Zuomin, Shenzhen Guangdong 518129 (CN)
(74) Representative: Epping - Hermann - Fischer
(86) International application number: PCT/CN2016/078184
(87) International publication number: WO 2017/166224

(57) **Abstract**

Embodiments of the present invention relate to the communications field, and provide a method and a system for transmitting information about a transmission mode, a network device, and a terminal device. The method includes: determining information about at least two downlink transmission modes, where in the at least two downlink transmission modes, a first downlink transmission mode is used in downlink data transmission in a time unit of a first transmission time interval TTI, a second downlink transmission mode is used in downlink data transmission in a time unit of a second TTI, and a length of the first TTI is different from a length of the second TTI; and sending the information about the at least two downlink transmission modes to a terminal device. In the present invention, the at least two downlink transmission modes are configured, and the first downlink transmission mode and the second downlink transmission mode in the at least two downlink transmission modes are corresponding to TTIs with different lengths, thereby resolving a problem of low flexibility when PDSCH transmission scheduling is performed in a case of TTIs with different lengths in a related technology, and improving data transmission scheduling flexibility.

## Description

### TECHNICAL FIELD

The present invention relates to the communications field, and in particular, to a method and a system for transmitting information about a transmission mode, a network device, and a terminal device.

### BACKGROUND

In various communications systems, service data transmission is usually performed based on scheduling performed by a network device. A time unit for scheduling performed by the network device is a transmission time interval (English: Transmission Time Interval, TTI for short). A shorter length of the TTI indicates a shorter round trip time (English: Round Trip Time, RTT for short) of data transmission. With development of technologies, an increasingly short RTT is expected, and therefore a short TTI transmission technology is introduced. To be specific, a TTI with a length less than that of a conventional TTI may be set when the network device performs scheduling. The RTT is a key performance indicator (English: Key Performance Indicator, KPI for short) in the communications system. The RTT indicates a total time between a time at which a transmit end sends data and a time at which the transmit end receives an acknowledgement from a receive end (the receive end immediately prepares to send the acknowledgement after receiving the data). For example, the network device may be an evolved NodeB (English: Evolved NodeB, eNB for short) in a Long Term Evolution (English: Long Term Evolution, LTE for short) system.

In a related technology, a length of the conventional TTI in the LTE system is 1 millisecond (English: millisecond, ms for short). In hybrid automatic repeat request (English: Hybrid Automatic Repeat Request, HARQ for short) technology-based data transmission, the RTT is eight TTIs, that is, 8 ms. After the short TTI transmission technology is introduced, a TTI in the LTE system may have a length less than 1 ms. For example, in downlink data transmission, the TTI may have a length of 0.2 ms or two orthogonal frequency division multiplexing (English: Orthogonal Frequency Division Multiplexing, OFDM for short) symbols (1 ms may include 12 or 14 symbols). In uplink data transmission, the TTI may have a length of 0.2 ms or two single carrier frequency division multiple access (English: Single-carrier Frequency-Division Multiple Access, SC-FDMA for short) symbols. An uplink symbol and a downlink symbol are collectively referred to as a symbol. If the TTI has a length of two symbols, the RTT of data transmission is 16 symbols. As a result, the RTT is shortened. To improve compatibility of the communications system, there are usually TTIs with different lengths in the communications system (for example, there may be TTIs with a length of 1 ms and a length less than 1 ms in the LTE system). For example, a process of configuring a downlink transmission mode for a terminal device in the LTE system may be as follows: 1. An eNB determines information that is about the downlink transmission mode and that needs to be notified to the terminal device. The downlink transmission mode is used to indicate physical downlink shared channel (English: Physical Downlink Shared Channel, PDSCH for short) transmission corresponding to a TTI with a time unit of 1 ms and PDSCH transmission corresponding to a TTI with a time unit less than 1 ms. The downlink transmission mode is corresponding to a type, an antenna port, a period, or other information of a measurement reference signal used for channel state information (English: Channel State Information, CSI for short) measurement. 2. The eNB notifies the determined information about the downlink transmission mode to the terminal device. 3. The terminal device measures CSI based on the measurement reference signal corresponding to the downlink transmission mode and obtains one piece of CSI. 4. The terminal device sends the obtained CSI to the eNB.

In the related technology, flexibility is low when the eNB performs PDSCH transmission scheduling in a case of TTIs with different lengths.

### SUMMARY

To resolve a prior-art problem of low flexibility when an eNB performs PDSCH transmission scheduling in a case of TTIs with different lengths, embodiments of the present invention provide a method and a system for transmitting information about a transmission mode, a network device, and a terminal device. The technical solutions are as follows.

According to a first aspect of the present invention, a method for transmitting information about a transmission mode is provided, where the method includes:
determining, by a network device, information about at least two downlink transmission modes, where in the at least two downlink transmission modes, a first downlink transmission mode is used in downlink data transmission in a time unit of a first transmission time interval TTI, a second downlink transmission mode is used in downlink data transmission in a time unit of a second TTI, and a length of the first TTI is different from a length of the second TTI. For example, in an LTE system and an LTE-A system, the first TTI may have a length of 1 ms, and the second TTI may have a length of two symbols. Downlink data transmission may be implemented by using a PDSCH.

After determining the information about the at least two downlink transmission modes, the network device may send the information about the at least two downlink transmission modes to a terminal device, and the terminal device may receive downlink data based on the at least two downlink transmission modes. For example, the terminal device may perform downlink data transmission in the time unit of the first TTI based on the first downlink transmission mode in the at least two downlink transmission modes, and perform downlink data transmission in the time unit of the second TTI based on the second downlink transmission mode.

The method may be applied to a mobile communications standard. The mobile communications standard may be any one of a 3rd generation mobile communications standard, a 4th generation mobile communications standard, and a future 5th generation mobile communications standard.

In the method, the network device configures the at least two downlink transmission modes for the terminal device, and the first downlink transmission mode and the second downlink transmission mode in the at least two downlink transmission modes are corresponding to TTIs with different lengths. In other words, the network device configures different downlink transmission modes for downlink data transmission corresponding to TTIs with different lengths, thereby improving downlink data transmission scheduling flexibility.

Optionally, the at least two downlink transmission modes further include a third downlink transmission mode, and the third downlink transmission mode may be used in downlink data transmission in a time unit of a third TTI. A length of the third TTI is different from those of the first TTI and the second TTI. In other words, the network device may configure at least three downlink transmission modes including the first, second, and third downlink transmission modes for the terminal device, and time units of the three downlink transmission modes may be different. The three downlink transmission modes can further diversify scheduling performed by the network device.

Optionally, the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI. In other words, any one of the at least two downlink transmission modes may be used in downlink data transmission corresponding to at least two TTIs with different lengths.

Optionally, a difference between the length of the fourth TTI and the length of the second TTI is less than a preset difference. The network device may set one transmission mode to be corresponding to a plurality of TTIs with slightly different lengths. Because the lengths of the TTIs are slightly different, a relatively appropriate period of a measurement reference signal may be set, without causing extremely high measurement reference signal overheads.

Optionally, in a related technology, the network device determines only one transmission mode for the terminal device, and one transmission mode is usually corresponding to one type of measurement reference signal. However, in the present invention, the network device determines the at least two downlink transmission modes for the terminal device, and the at least two downlink transmission modes may be corresponding to a same type of measurement reference signal or different types of measurement reference signals. A measurement reference signal corresponding to any downlink transmission mode may include any one of a CSI-RS, a CRS, and a CSI process.

Because a length of a TTI needs to be considered in reporting CSI obtained through measurement based on the CSI-RS, if a same downlink transmission mode is used for TTIs with different lengths, a period of the CSI-RS can hardly meet downlink data transmission in time units of TTIs with different lengths. However, in the method for transmitting information about a transmission mode provided in the present invention, each downlink transmission mode may be corresponding to a TTI with one length. Therefore, different periods of the CSI-RS may be configured for the downlink transmission modes based on different lengths of TTIs.

It should be noted that, for configuring the period of the CSI-RS based on the length of the TTI, refer to the related technology. Details are not described herein.

Optionally, the length of the second TTI is 1 millisecond, the length of the first TTI is less than the length of the second TTI, and types of the downlink transmission modes include transmission modes TM 1 to TM 10. In the TM 1 to the TM 10, it may be considered that the TM 1 or the TM 2 is mainly used to ensure data transmission robustness, and the TM 9 and the TM 10 are mainly used to improve data transmission efficiency. Types of the first downlink transmission mode and the second downlink transmission mode may be as follows:

A type of the second downlink transmission mode is the TM 1 or the TM 2, and a type of the first downlink transmission mode is the TM 9 or the TM 10; or
a type of the second downlink transmission mode is the TM 9 or the TM 10, and a type of the first downlink transmission mode is any one of the TM 1 to the TM 8; or
a type of the second downlink transmission mode is the TM 1 or the TM 2, and a type of the first downlink transmission mode is any one of the TM 1 to the TM 8.

It should be noted that, the foregoing configuration of the types of the downlink transmission modes is merely an example. If a new downlink transmission mode is introduced subsequently, for example, if a TM 11 and a TM 12 are newly introduced, the new downlink transmission modes may still be configured by using a same method.

In the related technology, user equipment determines only one transmission mode for UE, and there is usually only one antenna port configuration manner in one transmission mode. However, in the present invention, the user equipment determines the at least two downlink transmission modes for the UE. In the at least two downlink transmission modes, an antenna port of at least one measurement reference signal is configured for any one of the at least two downlink transmission modes. In addition, configuration statuses of antenna ports in the first downlink transmission mode and the second downlink transmission mode in the at least two downlink transmission modes may be different. The configuration statuses of the antenna ports in the first downlink transmission mode and the second downlink transmission mode may include the following three cases.
Case 1: A port number of an antenna port in the first downlink transmission mode is different from a port number of an antenna port in the second downlink transmission mode, and the first downlink transmission mode and the second downlink transmission mode are also corresponding to different quantities of antenna ports. For example, there are two antenna ports with port numbers 0 and 1 in the first downlink transmission mode, and there is one antenna port with a port number 3 in the second downlink transmission mode.
Case 2: A port number of an antenna port in the first downlink transmission mode is different from a port number of an antenna port in the second downlink transmission mode, but the first downlink transmission mode and the second downlink transmission mode are corresponding to a same quantity of antenna ports. For example, there are two antenna ports with port numbers 0 and 1 in the first downlink transmission mode, and there is one antenna port with a port number 3 in the second downlink transmission mode.
Case 3: A port number of an antenna port in the first downlink transmission mode is the same as a port number of an antenna port in the second downlink transmission mode, and quantities of antenna ports are different in the first downlink transmission mode and the second downlink transmission mode. For example, if there are two antenna ports with port numbers 0 and 1 in the first downlink transmission mode, and there is one antenna port with a port number 0 in the second downlink transmission mode, there is a same port number 0 but quantities of antenna ports are different in the second downlink transmission mode and the first downlink transmission mode.

Optionally, the sending, by the network device, the information about the at least two downlink transmission modes to a terminal device includes:
sending, by the network device, the information about the at least two downlink transmission modes to the terminal device by using physical layer signaling or radio resource control (English: Radio Resource Control, RRC for short) signaling. In addition, the network device may send the information about the downlink transmission modes to the terminal device by using Media Access Control (English: Media Access Control, MAC for short) layer signaling.

According to a second aspect of the present invention, a method for transmitting information about a transmission mode is provided, where the method includes:
receiving, by a terminal device, information about at least two downlink transmission modes that is sent by a network device, where in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI; and
after obtaining the information about the at least two downlink transmission modes that is sent by the network device, parsing, by the terminal device, the information about the at least two downlink transmission modes, and determining the at least two downlink transmission modes based on the information about the at least two downlink transmission modes; and after determining the at least two downlink transmission modes, receiving, by the terminal device, downlink data based on the at least two downlink transmission modes. For example, the terminal device may receive downlink data corresponding to the first TTI based on the first downlink transmission mode in the at least two downlink transmission modes, and receive downlink data corresponding to the second TTI based on the second downlink transmission mode.

Optionally, the at least two downlink transmission modes further include a third downlink transmission mode. The third downlink transmission mode is used in downlink data transmission in a time unit of a third TTI, and a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

Optionally, each of the at least two downlink transmission modes is corresponding to a measurement reference signal.

After the determining the at least two downlink transmission modes based on the information about the at least two downlink transmission modes, the method further includes:
obtaining, by the terminal device, first CSI through measurement based on a measurement reference signal corresponding to the first downlink transmission mode, and obtaining second CSI through measurement based on a measurement reference signal corresponding to the second downlink transmission mode, where the CSI may include at least one of a channel quality indicator (English: Channel Quality Indicator, CQI for short), a precoding matrix indication (English: Precoding Matrix Indication, PMI for short), and a rank indication (English: Rank Indication, RI for short), and different CSI is obtained through measurement based on measurement reference signals corresponding to different downlink transmission modes, so that CSI accuracy can be improved; and
sending, by the terminal device, the first CSI and the second CSI to the network device. The network device may allocate a modulation and coding scheme (English: Modulation and Coding Scheme, MCS for short) to the terminal device based on the two pieces of CSI sent by the terminal device, and send MCS indication information to the terminal device, where the MCS indication information is used to indicate a modulation and coding scheme used for a downlink physical channel (for example, a PDSCH).

Optionally, each of the at least two downlink transmission modes is corresponding to a measurement reference signal.

After the determining the at least two downlink transmission modes based on the information about the at least two downlink transmission modes, the method further includes:
obtaining, by the terminal device, the first CSI through measurement based on the measurement reference signal corresponding to the first downlink transmission mode, and sending the first CSI to the network device. In other words, the terminal device may measure CSI by using a measurement reference signal corresponding to one of the first downlink transmission mode and the second downlink transmission mode. For example, when two measurement reference signals are of a same type (for example, the measurement reference signals are both CRSs), the CSI is measured by using a measurement reference signal corresponding to one downlink transmission mode, so that network resources consumed by the measurement reference signal and consumed in CSI transmission can be reduced.

According to a third aspect of the present invention, a method for transmitting information about a transmission mode is provided, where the method includes:
determining, by a network device, information about at least two uplink transmission modes, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
sending, by the network device, the information about the at least two uplink transmission modes to a terminal device.

Optionally, the sending the information about the at least two uplink transmission modes to a terminal device includes:
sending, by the network device, the information about the at least two uplink transmission modes to the terminal device by using physical layer signaling or RRC signaling. In addition, the network device may send the information about the uplink transmission modes to the terminal device by using MAC layer signaling.

According to a fourth aspect of the present invention, a method for transmitting information about a transmission mode is provided, where the method includes:
receiving information about at least two uplink transmission modes that is sent by a network device, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
determining the at least two uplink transmission modes based on the information about the at least two uplink transmission modes.

According to a fifth aspect of the present invention, a network device is provided, where the network device includes:
a downlink information determining unit, configured to determine information about at least two downlink transmission modes, where in the at least two downlink transmission modes, a first downlink transmission mode is used in downlink data transmission in a time unit of a first transmission time interval TTI, a second downlink transmission mode is used in downlink data transmission in a time unit of a second TTI, and a length of the first TTI is different from a length of the second TTI; and
a downlink information sending unit, configured to send the information about the at least two downlink transmission modes to a terminal device.

Optionally, the at least two downlink transmission modes further include a third downlink transmission mode; and
the third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, and a length of the fourth TTI is different from the length of the second TTI.

Optionally, a difference between the length of the fourth TTI and the length of the second TTI is less than a preset difference.

Optionally, each of the at least two downlink transmission modes is corresponding to a measurement reference signal, and the measurement reference signal includes any one of a channel state information-reference signal CSI-RS, a common reference signal CRS, and a channel state information process CSI process.

Optionally, the length of the second TTI is 1 millisecond, the length of the first TTI is less than the length of the second TTI, and types of the downlink transmission modes include transmission modes TM 1 to TM 10; and
a type of the second downlink transmission mode is the TM 1 or the TM 2, and a type of the first downlink transmission mode is the TM 9 or the TM 10; or
a type of the second downlink transmission mode is the TM 9 or the TM 10, and a type of the first downlink transmission mode is any one of the TM 1 to the TM 8; or
a type of the second downlink transmission mode is the TM 1 or the TM 2, and a type of the first downlink transmission mode is any one of the TM 1 to the TM 8.

Optionally, any one of the at least two downlink transmission modes is corresponding to an antenna port of at least one measurement reference signal; and
a port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports; or
a port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports; or
a port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

Optionally, the downlink information sending unit is specifically configured to send the information about the at least two downlink transmission modes to the terminal device by using physical layer signaling or radio resource control signaling.

According to a sixth aspect of the present invention, a terminal device is provided, where the terminal device includes:
a downlink information receiving unit, configured to receive information about at least two downlink transmission modes that is sent by a network device, where in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI; and
a downlink mode determining unit, configured to determine the at least two downlink transmission modes based on the information about the at least two downlink transmission modes.

Optionally, the at least two downlink transmission modes further include a third downlink transmission mode; and
the third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

Optionally, each of the at least two downlink transmission modes is corresponding to a measurement reference signal; and
the terminal device further includes:
a first CSI measurement unit, configured to: obtain first CSI through measurement based on a measurement reference signal corresponding to the first downlink transmission mode, and obtain second CSI through measurement based on a measurement reference signal corresponding to the second downlink transmission mode; and
a first CSI sending unit, configured to send the first CSI and the second CSI to the network device.

Optionally, each of the at least two downlink transmission modes is corresponding to a measurement reference signal; and
the terminal device further includes:
a second CSI measurement unit, configured to obtain the first CSI through measurement based on the measurement reference signal corresponding to the first downlink transmission mode; and
a second CSI sending unit, configured to send the first CSI to the network device.

According to a seventh aspect of the present invention, a network device is provided, where the network device includes:
an uplink information determining unit, configured to determine information about at least two uplink transmission modes, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
an uplink information sending unit, configured to send the information about the at least two uplink transmission modes to a terminal device.

Optionally, the uplink information sending unit is specifically configured to send the information about the at least two uplink transmission modes to the terminal device by using physical layer signaling or radio resource control signaling.

According to an eighth aspect of the present invention, a terminal device is provided, where the terminal device includes:
an uplink information receiving unit, configured to receive information about at least two uplink transmission modes that is sent by a network device, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
an uplink mode determining unit, configured to determine the at least two uplink transmission modes based on the information about the at least two uplink transmission modes.

According to a ninth aspect of the present invention, a network device is provided, where the network device includes a processor, a memory, a network interface, and a bus, the bus is configured to connect the processor, the memory, and the network interface, and the processor is configured to execute a program stored in the memory.

The processor is configured to determine information about at least two downlink transmission modes, where in the at least two downlink transmission modes, a first downlink transmission mode is used in downlink data transmission in a time unit of a first transmission time interval TTI, a second downlink transmission mode is used in downlink data transmission in a time unit of a second TTI, and a length of the first TTI is different from a length of the second TTI.

The network interface is configured to send the information about the at least two downlink transmission modes to a terminal device.

Optionally, the at least two downlink transmission modes further include a third downlink transmission mode; and
the third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, and a length of the fourth TTI is different from the length of the second TTI.

Optionally, a difference between the length of the fourth TTI and the length of the second TTI is less than a preset difference.

Optionally, each of the at least two downlink transmission modes is corresponding to a measurement reference signal, and the measurement reference signal includes any one of a channel state information-reference signal CSI-RS, a common reference signal CRS, and a channel state information process CSI process.

Optionally, the length of the second TTI is 1 millisecond, the length of the first TTI is less than the length of the second TTI, and types of the downlink transmission modes include transmission modes TM 1 to TM 10; and
a type of the second downlink transmission mode is the TM 1 or the TM 2, and a type of the first downlink transmission mode is a TM 9 or the TM 10; or
a type of the second downlink transmission mode is the TM 9 or the TM 10, and a type of the first downlink transmission mode is any one of the TM 1 to the TM 8; or
a type of the second downlink transmission mode is the TM 1 or the TM 2, and a type of the first downlink transmission mode is any one of the TM 1 to the TM 8.

Optionally, any one of the at least two downlink transmission modes is corresponding to an antenna port of at least one measurement reference signal; and
a port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports; or
a port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports; or
a port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

The processor is configured to send the information about the at least two downlink transmission modes to the terminal device by using physical layer signaling or radio resource control signaling.

According to a tenth aspect of the present invention, a terminal device is provided, where the terminal device includes a transmitter, a receiver, and a processor.

The receiver is configured to receive information about at least two downlink transmission modes that is sent by a network device, where in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI.

The processor is configured to determine the at least two downlink transmission modes based on the information about the at least two downlink transmission modes.

Optionally, the at least two downlink transmission modes further include a third downlink transmission mode; and
the third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

Optionally, each of the at least two downlink transmission modes is corresponding to a measurement reference signal;
the processor is configured to: obtain first CSI through measurement based on a measurement reference signal that is received by the receiver and that corresponds to the first downlink transmission mode, and obtain second CSI through measurement based on a measurement reference signal corresponding to the second downlink transmission mode; and
the transmitter is configured to send the first CSI and the second CSI to the network device.

Optionally, each of the at least two downlink transmission modes is corresponding to a measurement reference signal;
the processor is configured to obtain the first CSI through measurement based on the measurement reference signal that is received by the receiver and that corresponds to the first downlink transmission mode; and
the transmitter is configured to send the first CSI to the network device.

According to an eleventh aspect of the present invention, a network device is provided, where the network device includes a processor, a memory, a network interface, and a bus, the bus is configured to connect the processor, the memory, and the network interface, and the processor is configured to execute a program stored in the memory.

The processor is configured to determine information about at least two uplink transmission modes, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI.

The network interface is configured to send the information about the at least two uplink transmission modes to a terminal device.

The network interface is specifically configured to send the information about the at least two uplink transmission modes to the terminal device by using physical layer signaling or radio resource control signaling.

According to a twelfth aspect of the present invention, a terminal device is provided, where the terminal device includes a receiver and a processor.

The receiver is configured to receive information about at least two uplink transmission modes that is sent by a network device, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI.

The processor is configured to determine the at least two uplink transmission modes based on the information about the at least two uplink transmission modes.

According to a thirteenth aspect of the present invention, a system for transmitting information about a transmission mode is provided, where the system includes a network device and a terminal device, where
the network device includes the network device provided in the fifth aspect or the ninth aspect; and
the terminal device includes the terminal device provided in the sixth aspect or the tenth aspect.

According to a fourteenth aspect of the present invention, a system for transmitting information about a transmission mode is provided, where the system includes a network device and a terminal device, where
the network device includes the network device provided in the seventh aspect or the eleventh aspect; and
the terminal device includes the terminal device provided in the eighth aspect or the twelfth aspect.

The technical solutions provided in the embodiments of the present invention bring the following beneficial effects:

The at least two downlink transmission modes are configured for the terminal device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in the related technology, and improving downlink data transmission scheduling flexibility.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.

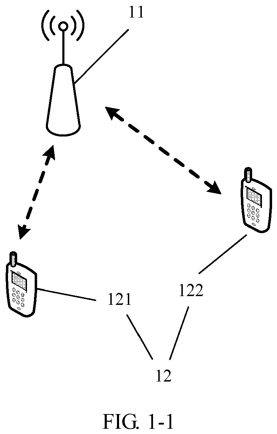

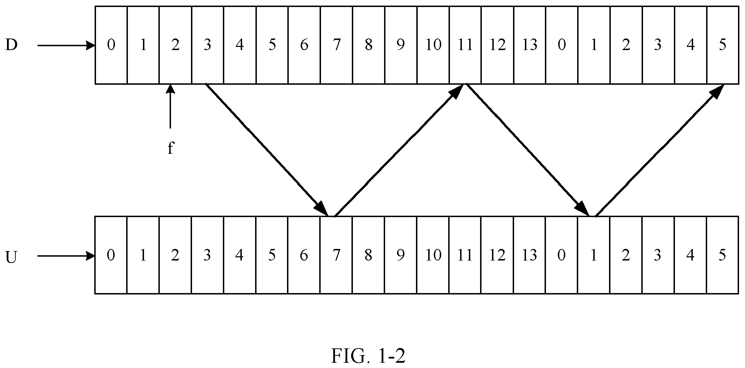

FIG. 1-1 is a schematic diagram of an implementation environment of a method for transmitting information about a transmission mode in each embodiment of the present invention;
FIG. 1-2 is a schematic diagram of a process of downlink and uplink data transmission corresponding to a TTI with a length of 0.5 ms;
FIG. 2 is a flowchart of a method for transmitting information about a downlink transmission mode according to an embodiment of the present invention;
FIG. 3 is a flowchart of a method for transmitting information about a downlink transmission mode according to an embodiment of the present invention;
FIG. 4-1 is a flowchart of a method for transmitting information about a downlink transmission mode according to an embodiment of the present invention;
FIG. 4-2 is a flowchart of obtaining and sending CSI in the embodiment shown in FIG. 4-1;
FIG. 4-3 is another flowchart of obtaining and sending CSI in the embodiment shown in FIG. 4-1;
FIG. 5 is a flowchart of a method for transmitting information about an uplink transmission mode according to an embodiment of the present invention;
FIG. 6 is a flowchart of a method for transmitting information about an uplink transmission mode according to an embodiment of the present invention;
FIG. 7 is a flowchart of a method for transmitting information about an uplink transmission mode according to an embodiment of the present invention;
FIG. 8 is a block diagram of a network device according to an embodiment of the present invention;
FIG. 9-1 is a block diagram of a terminal device according to an embodiment of the present invention;
FIG. 9-2 is a block diagram of another terminal device according to an embodiment of the present invention;
FIG. 9-3 is a block diagram of another terminal device according to an embodiment of the present invention;
FIG. 10 is a block diagram of another network device according to an embodiment of the present invention;
FIG. 11 is a block diagram of a terminal device according to an embodiment of the present invention;
FIG. 12 is a block diagram of another network device according to an embodiment of the present invention;
FIG. 13 is a block diagram of another terminal device according to an embodiment of the present invention;
FIG. 14 is a block diagram of another network device according to an embodiment of the present invention; and
FIG. 15 is a block diagram of another terminal device according to an embodiment of the present invention.

The foregoing accompanying drawings show specific embodiments of the present invention, and more detailed descriptions are provided below. The accompanying drawings and text descriptions are not intended to limit the scope of the idea of the present invention in any manner, but are intended to describe the concept of the present invention for persons skilled in the art with reference to particular embodiments.

### DESCRIPTION OF EMBODIMENTS

To make the objectives, technical solutions, and advantages of the present invention clearer, the following further describes the implementations of the present invention in detail with reference to the accompanying drawings.

The technical solutions in the embodiments of the present invention may be applied to various communications systems in a wireless cellular network, such as a Global System for Mobile Communications (Global System for Mobile communication, GSM) system, a Code Division Multiple Access (Code Division Multiple Access, CDMA) system, a Wideband Code Division Multiple Access (Wideband Code Division Multiple Access Wireless, WCDMA) system, a general packet radio service (General Packet Radio Service, GPRS) system, an LTE system, a Universal Mobile Telecommunications System (Universal Mobile Telecommunications System, UMTS), and a future 5G communications system. This is not limited in the embodiments of the present invention.

The technical solutions in the embodiments of the present invention are mainly applied to the Long Term Evolution (Long Term Evolution, LTE) system and a Long Term Evolution-Advanced system, especially applied to a licensed-assisted access using LTE (LAA-LTE, Licensed-Assisted Access Using LTE) system or an SA-LTE (Stand-alone Long Term Evolution, SA-LTE) system. In the communications systems to which the embodiments of the present invention are applied, network elements are an access network device (also referred to as a network device) and a terminal device (also referred to as user equipment).

FIG. 1-1 is a schematic diagram of an implementation environment of a method for transmitting information about a transmission mode in each embodiment of the present invention. The implementation environment may include a network device 11 and a terminal device 12.

The network device 11 may be an eNB, a macro base station, a micro base station (also referred to as a "small cell"), a picocell, an access point (English: Access Point, AP for short), a transmission point (English: Transmission Point, TP for short), or the like in the LTE system, a Long Term Evolution-Advanced (English: Long Term Evolution-Advanced, LTE-A for short) system, or a future 5G network system. The network device 11 is a device supporting a conventional TTI transmission technology and a short TTI transmission technology.

In this implementation environment, the terminal device may also be referred to as user equipment (English: User Equipment, UE for short), a mobile station (English: Mobile Station, MS for short), a mobile terminal (English: Mobile Terminal), and the like. The terminal device may bidirectionally communicate with one or more core networks by using a radio access network (English: Radio Access Network, RAN for short). For example, the terminal device may be a mobile phone (or referred to as a "cellular" phone) or a computer with a mobile terminal. For example, the terminal device may be a portable, pocket-sized, handheld, computer built-in, or in-vehicle mobile apparatus, and exchanges voice and/or data with the radio access network. A quantity of terminal devices 12 is not limited in this implementation environment. FIG. 1-1 shows two terminal devices 12. One terminal device 121 is a device supporting only the conventional TTI transmission technology, and the other terminal device 122 is a device supporting the conventional TTI transmission technology and the short TTI transmission technology. In a mobile communications standard, the network device 11 may bidirectionally communicate with the terminal device 122 by using the short TTI transmission technology or the conventional TTI transmission technology, and the network device 11 may bidirectionally communicate with the terminal device 121 by using the conventional TTI transmission technology. The mobile communications standard may be any one of a 3rd generation mobile communications standard, a 4th generation mobile communications standard, and a future 5th generation mobile communications standard. As shown in FIG. 1-2, FIG. 1-2 is a schematic diagram of a process of downlink and uplink data transmission corresponding to a TTI with a length of one timeslot, that is, 0.5 ms. Each block f represents one timeslot, and a number in the block represents a number of a timeslot. The network device sends data to the terminal device in a timeslot 3 by using a downlink physical channel D. If the terminal device correctly demodulates and decodes the received data, the terminal device feeds back an acknowledgement (English: Acknowledgement, ACK for short) to the network device in a timeslot 7 by using an uplink physical channel U; or if the terminal device does not correctly demodulate and decode the received data, the terminal device feeds back a negative acknowledgment (English: Negative Acknowledgment, NACK for short) to the network device in a timeslot 7 by using an uplink physical channel U. The network device determines, based on the received ACK or NACK, whether to perform new data transmission or retransmission processing in a timeslot 11 by using the downlink physical channel D. The ACK and the NACK that are fed back may also be collectively referred to as HARQ-ACK information. Therefore, when data transmission is performed based on a TTI with a length of one timeslot, an RTT of data transmission is eight timeslots, that is, 4 ms. The data transmission performed based on the TTI with the length of one timeslot has a delay shorter than that of data transmission corresponding to a TTI with a length of 1 ms (in the data transmission corresponding to the TTI with the length of 1 ms, the RTT is correspondingly increased to 8 ms). A TTI may have a plurality of lengths. For example, a length of the TTI may be one, two, three, four, five, six, or seven symbols (uplink data transmission symbols or downlink data transmission symbols). Alternatively, a length of the TTI may be a combination of TTIs with at least two different lengths of one, two, three, four, five, six, and seven symbols. For example, 1 ms includes four TTIs with lengths that are respectively four, three, four, and three symbols; or four, three, three, and four symbols; or a combination of TTIs with other different lengths. Similarly, a data packet whose TTI is a length less than 1 ms may be referred to as a short-TTI data packet. Transmission of the short-TTI data packet in frequency domain may be distributed consecutively or non-consecutively.

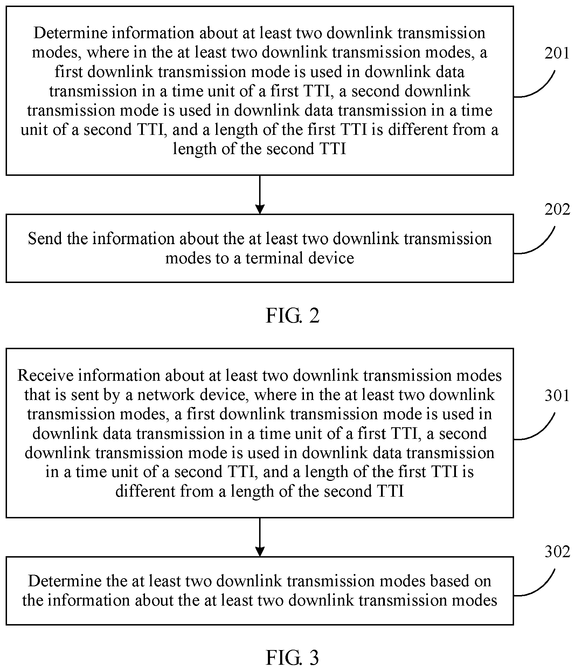

FIG. 2 is a flowchart of a method for transmitting information about a downlink transmission mode according to an embodiment of the present invention. The method may be applied to the network device in the implementation environment shown in FIG. 1-1. The method for transmitting information about a downlink transmission mode may include the following steps.

Step 201: Determine information about at least two downlink transmission modes, where in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI.

Step 202: Send the information about the at least two downlink transmission modes to a terminal device.

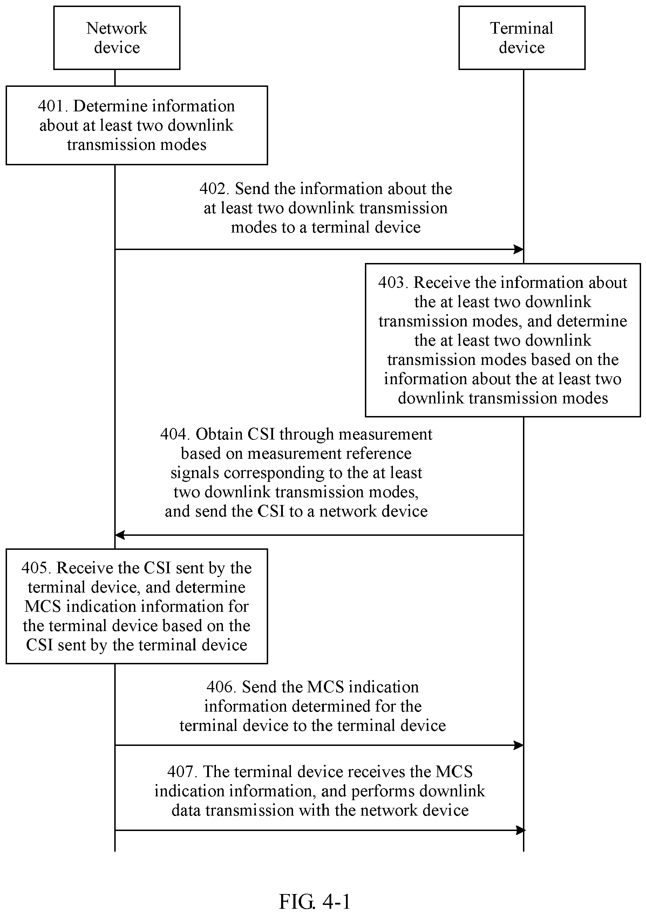

For specific content and implementations of this embodiment of the present invention, refer to the embodiment shown in FIG. 4-1. Details are not described herein again.

In conclusion, in the method for transmitting information about a downlink transmission mode provided in this embodiment of the present invention, the at least two downlink transmission modes are configured for the terminal device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in a related technology, and improving downlink data transmission scheduling flexibility.

FIG. 3 is a flowchart of a method for transmitting information about a downlink transmission mode according to an embodiment of the present invention. The method may be applied to the terminal device in the implementation environment shown in FIG. 1-1. The method for transmitting information about a downlink transmission mode may include the following steps.

Step 301: Receive information about at least two downlink transmission modes that is sent by a network device, where in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI.

Step 302: Determine the at least two downlink transmission modes based on the information about the at least two downlink transmission modes.

For specific content and implementations of this embodiment of the present invention, refer to the embodiment shown in FIG. 4-1. Details are not described herein again.

In conclusion, in the method for transmitting information about a downlink transmission mode provided in this embodiment of the present invention, the downlink transmission modes are determined based on the information about the at least two downlink transmission modes that is sent by the network device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in a related technology, and improving downlink data transmission scheduling flexibility.

FIG. 4-1 is a flowchart of a method for transmitting information about a downlink transmission mode according to an embodiment of the present invention. The method may be applied to the implementation environment shown in FIG. 1-1. The method for transmitting information about a downlink transmission mode may include the following steps.

Step 401: A network device determines information about at least two downlink transmission modes.

When the method for transmitting information about a downlink transmission mode provided in this embodiment of the present invention is used, the network device may first determine the information about the at least two downlink transmission modes. In the at least two downlink transmission modes, a first downlink transmission mode is used in downlink data transmission in a time unit of a first TTI, and a second downlink transmission mode is used in downlink data transmission in a time unit of a second TTI. A length of the first TTI is different from a length of the second TTI. In other words, the first downlink transmission mode and the second downlink transmission mode are corresponding to TTIs with different lengths. The first downlink transmission mode is any one of the at least two downlink transmission modes, and the second downlink transmission mode is any downlink transmission mode other than the first downlink transmission mode in the at least two downlink transmission modes. Data in the downlink transmission mode may be transmitted by using a PDSCH or a channel, newly introduced into a wireless communications standard, with a same function but a different name.

Optionally, the at least two downlink transmission modes may include at least one downlink transmission mode corresponding to a time unit of a conventional TTI, so that backward compatibility (a capability of a product of a new improved version to continue working with a product of an old and less functional version) of the method for transmitting information about a downlink transmission mode provided in this embodiment of the present invention can be improved. For example, in an LTE system and an LTE-A system, the first TTI is a TTI with a length of two symbols, and the second TTI may be a conventional TTI with a length of 1 ms.

From a perspective of a frequency dimension, a smallest unit is a subcarrier. From a perspective of both a time dimension and a frequency dimension, a smallest unit of a resource used for antenna port transmission is a resource element (English: Resource Element, RE for short). One RE occupies one symbol in time domain, and occupies one subcarrier in frequency domain. A resource element group (English: Resource-Element Group, REG for short) may include an integral quantity of REs. For example, one REG may include 4 or 16 REs. One physical resource block (English: Physical Resource Block, PRB for short) includes one timeslot in time domain, and includes 12 subcarriers in frequency domain. One subframe includes one PRB pair. One resource block (English: Resource Block, RB for short) occupies one subframe in time domain, and occupies 12 subcarriers in frequency domain. A resource block group (English: Resource Block Group, RBG for short) may include an integral quantity of PRBs. For example, one RBG may include one, two, three, or four PRBs, or another integral quantity of PRBs.

In the embodiments of the present invention, both an uplink symbol and a downlink symbol may be collectively referred to as a symbol. A symbol includes a cyclic prefix (English: Cyclic Prefix, CP for short) and an information part. The information part includes all information about the symbol, and the CP is a duplicate of some information signals.

It should be noted that, each of the at least two downlink transmission modes sent by the network device to a terminal device is corresponding to a measurement reference signal. The reference signal corresponding to each downlink transmission mode may be configured based on a length of a TTI, and various parameters such as a type and a period of a measurement reference signal corresponding to one downlink transmission mode are independent of those of a measurement reference signal corresponding to another downlink transmission mode. For a process of configuring the reference signal based on the length of the TTI, refer to a related technology. For example, when the reference signal is a channel state information-reference signal (English: Channel State Information-Reference Signal, CSI-RS for short), considering a processing time of the terminal device, an absolute time for CSI-RS feedback may be longer if a length of a TTI is longer whereas an absolute time for CSI-RS feedback may be shorter if a length of a TTI is shorter. The network device may configure various parameters of the measurement reference signal in the downlink transmission mode, and send the various parameters together with the information about the downlink transmission mode to the terminal device, or send the various parameters of the measurement reference signal to the terminal device before sending the information about the downlink transmission mode.

It should be further noted that, in the LTE system or the LTE-A system, types of the downlink transmission modes may include 10 types of downlink transmission modes: a transmission mode (English: Transmission mode, TM for short) 1 to a TM 10. Measurement reference signals corresponding to the TM 1 to the TM 8 are usually common reference signals (English: Common Reference Signal, CRS for short), a measurement reference signal corresponding to the TM 9 is usually a CSI-RS, and a measurement reference signal corresponding to the TM 10 is usually a CSI process (English: CSI-Process). One CSI process includes a non-zero power CSI-RS and one channel state information-interference estimation (English: Channel State Information-Interference Measurement, CSI-IM for short). The network device usually sends the CRS in each subframe, and a quantity of CRSs in each subframe is related to a quantity of antenna ports of the CRS configured in the system. Different from the CRS, the CSI-RS is usually configured by the network device at a fixed interval. A quantity of CSI-RSs in a subframe in which a CSI-RS exists is related to a quantity of antenna ports of the CSI-RS configured in the system. Similar to a configuration status of the CSI-RS, the CSI-IM is also configured at a fixed interval, and a difference is that a quantity of antenna ports of the CSI-IM is fixed. In this embodiment of the present invention, types of the first downlink transmission mode and the second downlink transmission mode may be the same or different. For example, the first downlink transmission mode may be the TM 2, and the second downlink transmission mode may be the TM 4. In the TM 1 to the TM 10, the TM 1 and the TM 2 have relatively high reliability, and there are relatively large quantities of transmission layers in the TM 9 and the TM 10. Specifically, for information about the TM 1 to the TM 10, refer to the related technology. Details are not described herein.

In addition, each type of downlink transmission mode may further include a fallback mode. The fallback mode is a data transmission mode of transmit diversity or a single antenna. The fallback mode is a transmission mode used for ensuring performance robustness (in other words, the fallback mode is a transmission mode used in a case of poor network performance). For example, when a channel state of a user is quite good, a throughput (a data volume of data successfully transmitted in a time unit by a network, a device, a port, a virtual circuit, or another facility) of data transmission between the network device and the terminal device can be increased by using the configured transmission mode. When the channel state of the user deteriorates, linkage between the terminal device and the network device can be ensured by using the fallback mode. For example, a fallback may be performed from the TM 9 to the transmit diversity transmission mode, and the measurement reference signal changes from the CSI-RS to the CRS.

The LTE system or the LTE-A system is currently used to describe several optional manners of setting types of transmission modes. For example, the length of the second TTI is 1 ms, and the length of the first TTI is less than the length of the second TTI. The types of the first downlink transmission mode and the second downlink transmission mode may be set in the following three manners:

Manner 1: A type of the second downlink transmission mode is the TM 1 or the TM 2, and a type of the first downlink transmission mode is the TM 9 or the TM 10.

In the LTE system or the LTE-A system, 1 ms is a length of a conventional TTI, and a downlink data transmission mode corresponding to a time unit of 1 ms is usually used as a fallback mode. Therefore, reliability of the second downlink transmission mode can be improved by setting the second transmission mode corresponding to the time unit of 1 ms to the TM 1 and the TM 2 with relatively high reliability. In addition, there are a relatively large quantity of transmission layers in the TM 9 or the TM 10, and a throughput of data transmission between the network device and the terminal device can be increased by setting the first downlink transmission mode to the TM 9 or the TM 10.

Manner 2: A type of the second downlink transmission mode is the TM 9 or the TM 10, and a type of the first downlink transmission mode is any one of the TM 1 to the TM 8.

Measurement reference signals corresponding to the TM 1 to the TM 8 are CRSs. Because the CRS is sent in each subframe, if the CRS is used as the measurement reference signal, the terminal device can rapidly measure and report CSI. This is advantageous to short-delay service transmission. In addition, in a high-speed scenario, the terminal device can rapidly track a channel state information change based on the CRS, thereby improving short-delay service transmission performance. In addition, a throughput of data transmission between the network device and the terminal device can be increased by setting the type of the second downlink transmission mode to the TM 9 or the TM 10.

Manner 3: A type of the second downlink transmission mode is the TM 1 or the TM 2, and a type of the first downlink transmission mode is any one of the TM 1 to the TM 8.

Reliability of the second downlink transmission mode can be improved by setting the type of the second downlink transmission mode to the TM 1 or the TM 2. Setting the type of the first downlink transmission mode to any one of the TM 1 to the TM 8 is advantageous to short-delay service transmission. In addition, in a high-speed scenario, the terminal device can rapidly track a channel state information change based on the CRS, thereby improving short-delay service transmission performance.

It should be noted that, the foregoing configuration of the types of the downlink transmission modes is merely an example. If a new downlink transmission mode is introduced subsequently, for example, if a TM 11 and a TM 12 are newly introduced, the new downlink transmission modes may still be configured by using a same method.

It should be further noted that, the at least two downlink transmission modes further include a third downlink transmission mode. The third downlink transmission mode is used in downlink data transmission in a time unit of a third TTI, a length of the third TTI is different from the length of the first TTI, and the length of the third TTI is different from the length of the second TTI. In other words, the network device may determine at least three downlink transmission modes for the terminal device, and the three downlink transmission modes have different TTI lengths. For example, in the LTE system and the LTE-A system, the first TTI has a length of three symbols, the second TTI is a conventional TTI with a length of 1 ms, and the third TTI has a length of two symbols. In addition, the at least two downlink transmission modes may further include more downlink transmission modes. For a case of the more downlink transmission modes, refer to the first, second, or third downlink transmission mode. Details are not described herein again.

It should be further noted that, the second downlink transmission mode in the at least two downlink transmission modes may be further used in downlink data transmission in a time unit of a fourth TTI, and a length of the fourth TTI is different from the length of the second TTI. In other words, in the downlink transmission modes determined by the network device for the terminal device, one downlink transmission mode may be used in downlink data transmission corresponding to two TTIs with different lengths. The two TTIs with different lengths may be two TTIs with lengths less than a length of a conventional TTI; or one TTI may be a TTI with a length less than a length of a conventional TTI, and the other TTI is a conventional TTI. For example, the length of the fourth TTI is 1 ms, and the length of the second TTI is 0.7 ms. In addition, any one of the downlink transmission modes determined by the network device for the terminal device may be used in downlink transmission corresponding to three or more TTIs with different lengths. This is not limited in this embodiment of the present invention. When the network device determines a downlink transmission mode for the terminal device, it may be considered whether the terminal device supports a short TTI, and a quantity of TTIs with different lengths in the transmission mode is determined when the terminal device can support the short TTI.

In the LTE system and the LTE-A system, one subframe has a time length of 1 ms. Subframes may be classified into two categories: a normal cyclic prefix (English: Normal Cyclic Prefix, NCP for short) subframe and an extended cyclic prefix (English: Extended Cyclic Prefix, ECP for short) subframe. The NCP subframe includes 14 symbols. In the NCP subframe, the symbols are numbered from 0 to 13, a 0^{th} symbol to a sixth symbol are odd number timeslots, and a seventh symbol to a thirteenth symbol are even number timeslots. The ECP subframe includes 12 symbols. In the ECP subframe, the symbols are numbered from 0 to 11, a 0^{th} symbol to a fifth symbol are odd number timeslots, and a sixth symbol to an eleventh symbol are even number timeslots. In other words, in the NCP subframe, the length of the first TTI and the length of the second TTI may be 1 to 14 symbols, and in the ECP subframe, the length of the first TTI and the length of the second TTI may be 1 to 12 symbols. In this embodiment of the present invention, the network device may configure lengths of TTIs corresponding to the at least two transmission modes in the respective information about the transmission modes, and send the lengths of the TTIs together with the respective information about the transmission modes to the terminal device, or separately send the lengths of the TTIs to the terminal device.

Any one of the at least two downlink transmission modes is corresponding to an antenna port of at least one measurement reference signal. Different measurement reference signals have their own antenna port numbers. For example, port numbers of antenna ports of the CRS are 0 to 3, port numbers of antenna ports of a demodulation reference signal (English: Demodulation Reference Signal, DMRS for short) are 7 to 14, and port numbers of antenna ports of the CSI-RS are 15 to 22. Configuration may be performed starting from a smallest port number. For example, port numbers of a CRS for which two antenna ports are configured may be 0 and 1. One downlink transmission mode may be corresponding to one antenna port configuration manner. The network device may configure configuration information of the antenna port of the measurement reference signal in the downlink transmission mode, and send the configuration information of the antenna port of the measurement reference signal together with the information about the downlink transmission mode to the terminal device, or send the configuration information of the antenna port of the measurement reference signal to the terminal device before sending the information about the downlink transmission mode.

It should be noted that, the foregoing description about the antenna port number is merely an example. If an antenna port number is newly introduced subsequently, for example, if antenna ports 23 and 24 are newly introduced, whether the newly introduced antenna ports are configured may still be determined based on a function of the newly introduced antenna ports.

Optionally, antenna ports of measurement reference signals corresponding to the first downlink transmission mode and the second downlink transmission mode may be configured in the following manners:
1. A port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports.

For example, there are two antenna ports of the measurement reference signal corresponding to the first downlink transmission mode, and port numbers of the two antenna ports are 0 and 1. There is one antenna port of the measurement reference signal corresponding to the second downlink transmission mode, and a port number of the antenna port is 3.
2. A port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports.

For example, there are two antenna ports of the measurement reference signal corresponding to the first downlink transmission mode, and port numbers of the two antenna ports are 0 and 1. There are two antenna ports of the measurement reference signal corresponding to the first downlink transmission mode, and port numbers of the two antenna ports are 3 and 4.
3. A port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

For example, there are two antenna ports of the measurement reference signal corresponding to the first downlink transmission mode, and port numbers of the two antenna ports are 0 and 1. There is one antenna port of the measurement reference signal corresponding to the first downlink transmission mode, and a port number of the antenna port is 0. The antenna port with the port number 0 is an antenna port shared by the first downlink transmission mode and the second downlink transmission mode.
4. A port number of an antenna port of a measurement reference signal corresponding to the first downlink transmission mode is the same as a port number of an antenna port of a measurement reference signal corresponding to the second downlink transmission mode, and the first downlink transmission mode and the second downlink transmission mode are corresponding to a same quantity of antenna ports.

For example, there are two antenna ports of the measurement reference signal corresponding to the first downlink transmission mode, and port numbers of the two antenna ports are 0 and 1. There are two antenna ports of the measurement reference signal corresponding to the first downlink transmission mode, and port numbers of the two antenna ports are 0 and 1. The antenna ports with the port numbers 0 and 1 are antenna ports shared by the first downlink transmission mode and the second downlink transmission mode.

It should be noted that, the method for transmitting information about a downlink transmission mode provided in this embodiment of the present invention may be used to separately configure antenna ports for TTIs with different lengths. In other words, the network device may adjust, based on a case, configuration manners of antenna ports of measurement reference signals corresponding to different downlink transmission, so as to reduce communication resources. However, in the related technology, because one downlink transmission mode is usually configured for TTIs with different lengths, configuration statuses of antenna ports of measurement reference signals corresponding to downlink data transmission in a case of the TTIs with different lengths are the same, and the configuration status of the antenna port cannot be adjusted based on a case. Consequently, communication resources may be wasted.

The downlink transmission modes in this embodiment of the present invention may be transmission modes configured on a same carrier, or may be transmission modes configured on a plurality of carriers. For example, the first downlink transmission mode and the second downlink transmission mode may be transmission modes configured on a first carrier, or the first downlink transmission mode is a transmission mode configured on a first carrier, but the second downlink transmission mode is a transmission mode configured on a second carrier.

The method provided in this embodiment of the present invention may be applied to a mobile communications standard. The mobile communications standard may be any one of a 3rd generation mobile communications standard, a 4th generation mobile communications standard, and a future 5th generation mobile communications standard.

Step 402: The network device sends the information about the at least two downlink transmission modes to a terminal device.

After determining the information about the at least two downlink transmission modes, the network device may send the information about the at least two downlink transmission modes to the terminal device.

Optionally, the network device may send the information about the at least two downlink transmission modes to the terminal device by using physical layer signaling, MAC layer signaling, or RRC signaling.

The three types of signaling may explicitly indicate the information about the downlink transmission modes, or implicitly indicate the information about the downlink transmission modes. "Explicitly indicate" may mean that the network device directly sends the information about the at least two downlink transmission modes to the terminal device. However, "implicitly indicate" may mean that the terminal device learns of a preset correspondence between a length of a TTI and a downlink transmission mode, the network device notifies the length of the TTI to the terminal device, and the terminal device may determine the information about the at least two downlink transmission modes based on the preset correspondence.

Step 403: The terminal device receives the information about the at least two downlink transmission modes, and determines the at least two downlink transmission modes based on the information about the at least two downlink transmission modes.

After obtaining the information about the at least two downlink transmission modes that is sent by the network device, the terminal device may parse and obtain the information about the at least two downlink transmission modes, and determine the at least two downlink transmission modes.

Step 404: The terminal device obtains CSI through measurement based on measurement reference signals corresponding to the at least two downlink transmission modes, and sends the CSI to the network device.

After determining the at least two downlink transmission modes, the terminal device may obtain the CSI through measurement based on the measurement reference signals corresponding to the at least two downlink transmission modes. The CSI may include at least one of a CQI, a PMI, and an RI. A process of obtaining the CSI through measurement based on the measurement reference signals may be as follows: 1. The terminal device obtains, by estimating the measurement reference signals, channel information used to measure the CSI. 2. The terminal device obtains, based on the channel information obtained through estimation, an optimum RI and/or PMI, and a signal to interference plus noise ratio (English: Signal to Interference plus Noise Ratio, SINR for short) corresponding to the RI and/or the PMI. 3. The terminal device quantizes the calculated SINR into a 4-bit (bit) CQI. The measurement reference signal may be sent by the network device.

The terminal device may report at least one of the CQI, the PMI, and the RI to the network device.

The measurement reference signal corresponding to the downlink transmission mode may include any one of a CSI-RS, a CRS, and a CSI process. The measurement reference signals corresponding to the first downlink transmission mode and the second downlink transmission mode in the at least two downlink transmission modes may be configured in the following nine manners shown in Table 1.

**Table 1**

| | **First downlink transmission mode** | **Second downlink transmission mode** |
|---|---|---|
| **Measurement reference signal** | CSI-RS | CSI-RS |
| | CSI-RS | CSI process |
| | CSI-RS | CRS |
| | CRS | CRS |
| | CRS | CSI-RS |
| | CRS | CSI process |
| | CSI process | CSI process |
| | CSI process | CSI-RS |
| | CSI process | CRS |

In Table 1, a first row and a first column on the left are table headers, describing information in Table 1. For example, when the measurement reference signal corresponding to the first downlink transmission mode is the CRS, the measurement reference signal corresponding to the second downlink transmission mode may be the CRS, the CSI-RS, or the CSI process.

The step of measuring and sending the CSI may include the following two cases.

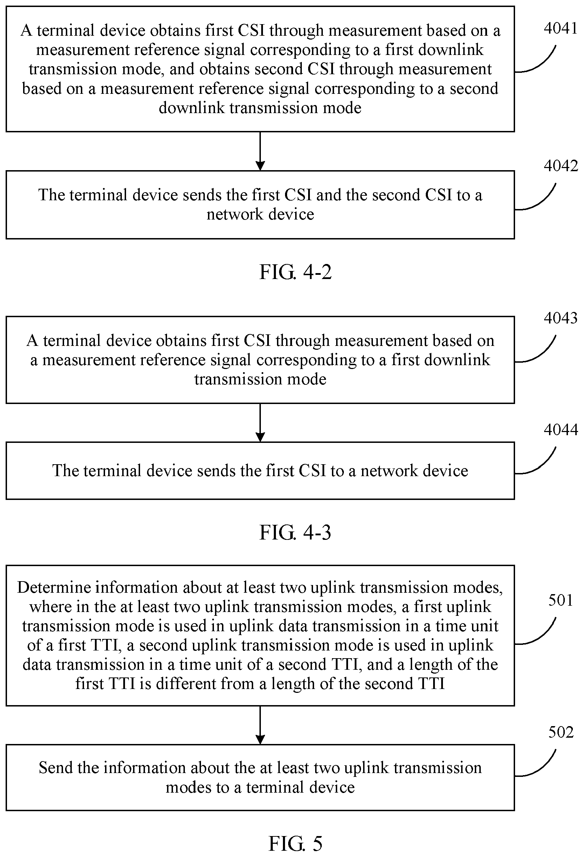

Case 1 is shown in FIG. 4-2.

Step 4041: The terminal device obtains first CSI through measurement based on a measurement reference signal corresponding to a first downlink transmission mode, and obtains second CSI through measurement based on a measurement reference signal corresponding to a second downlink transmission mode.

In other words, the terminal device may respectively obtain two pieces of CSI through measurement based on the measurement reference signal corresponding to the first downlink transmission mode and the measurement reference signal corresponding to the second downlink transmission mode. Measuring one piece of CSI for each of the two downlink transmission modes can improve CSI accuracy compared with the related technology in which only one piece of CSI is measured for downlink data transmission corresponding to different TTIs.

Step 4042: The terminal device sends the first CSI and the second CSI to the network device.

After obtaining the two pieces of CSI through measurement, the terminal device may send both the first CSI and the second CSI to the network device. In addition, the terminal device may alternatively send one of the first CSI and the second CSI to the network device. The terminal device may send the first CSI and the second CSI to the network device by using a physical uplink control channel (English: physical uplink control channel, PUCCH for short) or a PUSCH. The terminal device may send the CSI to the network device immediately after obtaining the CSI.

Optionally, the first CSI or the second CSI may be CSI that the network device triggers to report aperiodically. The terminal device determines, based on triggering signaling of the network device, a reporting time corresponding to the first CSI or the second CSI.

Optionally, the first CSI or the second CSI is CSI reported periodically.

Optionally, a period of the measurement reference signal corresponding to the first downlink transmission mode may be different from a period of the measurement reference signal corresponding to the second downlink transmission mode. Therefore, reporting periods of the first CSI and the second CSI may also be different accordingly. The network device may configure different reporting periods for the first CSI and the second CSI. Correspondingly, the network device may determine a correspondence between both the first CSI and the second CSI and the two downlink transmission modes based on a subframe or a symbol used for CSI reporting.

Optionally, the first downlink transmission mode is further used in downlink data transmission in a time unit of a fifth TTI, and the second downlink transmission mode is further used in downlink data transmission in a time unit of a sixth TTI. A length of the fifth TTI is different from a length of the sixth TTI, the length of the fifth TTI may be different from or the same as the length of the first TTI, and the length of the sixth TTI may be different from or the same as the length of the second TTI. A preparation time of downlink data transmission is related to a length of a TTI, and a shorter TTI indicates a shorter preparation time. Therefore, even though measurement results of the first CSI and the second CSI are obtained simultaneously, CSI corresponding to a TTI with a shorter length may be reported earlier than CSI corresponding to a TTI with a longer length. Even though the periods of the measurement reference signals configured in the first downlink transmission mode and the second downlink transmission mode are the same, the network device may also configure different reporting periods for the first CSI and the second CSI. Preferably, a length of a TTI corresponding to first CSI reporting is less than a length of a TTI corresponding to second CSI reporting. The first CSI may be obtained through measurement based on the CRS, and the network device configures a relatively short absolute reporting time interval for the first CSI. Therefore, the first CSI can be used to rapidly track a channel state information change, thereby improving service transmission performance.

Case 2 is shown in FIG. 4-3.

Step 4043: The terminal device obtains first CSI through measurement based on a measurement reference signal corresponding to a first downlink transmission mode.

The terminal device may obtain the CSI through measurement based on a measurement reference signal corresponding to any one of the at least two downlink transmission modes. Optionally, when the measurement reference signals corresponding to the first downlink transmission mode and the second downlink transmission mode are of a same type (for example, both the measurement reference signals are CSI-RSs), the terminal device may obtain the CSI through measurement based on only the measurement reference signal corresponding to the first downlink transmission mode or the second downlink transmission mode. Optionally, when the time unit of the first TTI of the first downlink transmission mode is shorter than the time unit of the second TTI of the second downlink transmission mode, the first CSI has relatively high accuracy, and the terminal device may obtain the first CSI through measurement based on the measurement reference signal corresponding to the first downlink transmission mode.

Step 4044: The terminal device sends the first CSI to the network device.

The terminal device may send the first CSI to the network device after obtaining the first CSI through measurement. The terminal device may send the first CSI to the network device by using a PUCCH or a PUSCH. The terminal device obtains one piece of CSI, and sends the piece of CSI to the network device, so that a speed of measuring and sending the CSI can be increased, network resources occupied by the CSI are reduced, and network system performance is improved.

It should be noted that, when the network device determines three or more downlink transmission modes, the terminal device may obtain three or more pieces of CSI through measurement, and send the three or more pieces of CSI to the network device. In other words, the terminal device may obtain at least one piece of CSI through measurement based on the measurement reference signals corresponding to the at least two downlink transmission modes, and send the at least one piece of CSI to the network device. For details, refer to step 4041 to step 4043. Details are not described herein.

In the related technology, in a single-carrier scenario, compared with downlink data transmission corresponding to a TTI with a time unit of 1 ms, in downlink data transmission corresponding to a TTI with a time unit less than 1 ms (that is, a short TTI), a channel state information change can be more rapidly tracked and reported, so that downlink data transmission performance can be improved. To support short TTI measurement and reporting, a measurement reference signal appearing relatively frequently needs to be configured correspondingly. When the measurement reference signal is the CSI-RS, a time interval at which the CSI-RS appears needs to be shortened. For example, in downlink data transmission corresponding to a TTI with a length of 1 ms and downlink data transmission corresponding to a TTI with a length of two symbols, measurement reference signals are CSI-RSs. In the downlink data transmission in which a period of a CSI-RS is five TTIs, and the length of the TTI is 1 ms, the network device sends the CSI-RS to the terminal device at a time interval of 5 ms, while in the downlink data transmission corresponding to the TTI with the length of two symbols, the network device may need to send a CSI-RS to the terminal device at a time interval of 10 symbols. In the downlink transmission corresponding to the TTI of 1 ms, a transmission mode may be the TM 9 or the TM 10 supporting data transmission of a maximum of eight transmission layers, and eight antenna ports of the CSI-RS need to be configured correspondingly. In the short TTI downlink transmission, a maximum of fewer than eight transmission layers may be supported, in other words, there is no need to configure eight antenna ports of the CSI-RS. If a same CSI-RS is configured for the TTI of 1 ms and the short TTI, the CSI-RS needs to meet requirements of both the TTI of 1 ms and the short TTI. In other words, the CSI-RS appears at a relatively short time interval and a relatively large quantity of antenna ports of the CSI-RS are required. Consequently, unnecessary CSI-RS overheads are caused.

However, in the method for transmitting information about a downlink transmission mode provided in this embodiment of the present invention, different downlink transmission modes are set for TTIs with different lengths. A corresponding period of a measurement reference signal or a corresponding quantity of antenna ports of the measurement reference signal may be configured for each downlink transmission mode based on a length of a TTI. For example, in the downlink data transmission corresponding to the TTI with the length of 1 ms, a period of the CSI-RS may be set to 5 ms, and a quantity of antenna ports may be set to 8, while in the downlink data transmission corresponding to the TTI with the length of two symbols, a period of the CSI-RS may be set to 1 ms, and a quantity of antenna ports may be set to 2, so that the CSI-RS can meet a requirement on CSI in downlink data transmission corresponding to TTIs with different lengths. This resolves a problem in the related technology.

It should be noted that, when the second downlink transmission mode is used in downlink data transmission in time units of the second TTI and the fourth TTI, a difference between the length of the fourth TTI and the length of the second TTI may be less than a preset difference. In other words, the network device may set one transmission mode to be corresponding to a plurality of TTIs with slightly different lengths. Because the lengths of the TTIs are slightly different, a relatively appropriate period of a measurement reference signal may be set, without causing extremely high measurement reference signal overheads. For example, the preset difference may be one symbol, and the second downlink transmission mode may be used in downlink data transmission corresponding to TTIs with lengths of one symbol and two symbols. Similarly, one transmission mode may be corresponding to three or more TTIs, where a difference between the TTIs is less than the preset difference.

The method for transmitting information about a downlink transmission mode provided in this embodiment of the present invention may further include the following steps.

Step 405: The network device receives the CSI sent by the terminal device.

Optionally, the network device determines MCS indication information for the terminal device based on the CSI sent by the terminal device.

The network device may determine the MCS indication information for the terminal device based on the CSI after obtaining the CSI sent by the terminal device. The MCS indication information is used to indicate a modulation and coding scheme used for a downlink physical channel (such as a PDSCH). Based on different CSI sent by the terminal device, the network device may determine the MCS indication information in the following two cases:

### 1. The network device obtains the first CSI and the second CSI.

In this case, the network device may determine first MCS indication information for the terminal device based on the first CSI, and determine second MCS indication information for the terminal device based on the second CSI. The first MCS indication information is used to indicate downlink data transmission in the first downlink transmission mode, and the second MCS indication information is used to indicate downlink data transmission in the second downlink transmission mode. Alternatively, the network device may determine one piece of MCS indication information for the terminal device based on the first CSI or the second CSI. The MCS indication information is used to indicate downlink data transmission in the first downlink transmission mode and the second downlink transmission mode.

### 2. The network device obtains the first CSI.

In this case, the network device may determine first MCS indication information for the terminal device based on the first CSI. The first MCS indication information is used to indicate downlink data transmission in the first downlink transmission mode and the second downlink transmission mode. In addition, the network device may alternatively determine, for the terminal device based on the first CSI, first MCS indication information and second MCS indication information that indicate a same modulation and coding scheme. The first MCS indication information is used to indicate downlink data transmission in the first downlink transmission mode, and the second MCS indication information is used to indicate downlink data transmission in the second downlink transmission mode.

It should be noted that, when the terminal device sends three or more pieces of CSI to the network device, the network device may determine one MCS based on each of the three or more pieces of CSI, or determine at least one MCS based on the three or more pieces of CSI. For details, refer to the foregoing two cases in this step. Details are not described herein again.

Step 406: The network device sends MCS indication information determined for the terminal device to the terminal device.

After determining the MCS indication information for the terminal device, the network device may send the MCS indication information to the terminal device.

The network device may send the MCS indication information determined for the terminal device to the terminal device by using a channel such as a physical downlink control channel (English: Physical Downlink Control Channel, PDCCH for short), an enhanced physical downlink control channel (English: Enhanced-Physical Downlink Control Channel, EPDCCH for short), a physical control format indicator channel (English: Physical Control Format Indicator Channel, PCFICH for short), or a physical hybrid ARQ indicator channel (English: Physical hybrid ARQ indicator channel, PHICH for short), or a channel, introduced into a wireless communications standard, with a same function but a different name.

Step 407: The terminal device receives the MCS indication information, and performs downlink data transmission with the network device.

The terminal device may receive downlink data based on the MCS indication information and the downlink transmission modes after obtaining the MCS indication information sent by the network device. The network device may send the downlink data of the terminal device to the terminal device by using a physical downlink shared channel (Physical Downlink Shared Channel, PDSCH for short), or a channel with a same function but a different name in the wireless communications standard. If the network device sends the first MCS indication information and the second MCS indication information to the terminal device, where the first MCS indication information is used to indicate downlink data transmission corresponding to the first downlink transmission mode, and the second MCS indication information is used to indicate downlink data transmission corresponding to the second downlink transmission mode, the terminal device may perform, based on the first MCS indication information, downlink data transmission corresponding to the first downlink transmission mode, and perform, based on the second MCS indication information, downlink data transmission corresponding to the second downlink transmission mode. If the network device sends one piece of MCS indication information to the terminal device, the terminal device may perform, based on the piece of MCS indication information, downlink data transmission corresponding to the first downlink transmission mode and the second downlink transmission mode.

It should be noted that, first, second, and third added before concepts such as a downlink transmission mode, an uplink transmission mode, a TTI, MCS indication information, and CSI in the embodiments of the present invention are all intended to distinguish between these concepts, but do not indicate specific naming of these concepts.

In conclusion, in the method for transmitting information about a downlink transmission mode provided in this embodiment of the present invention, the at least two downlink transmission modes are configured for the terminal device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in the related technology, and improving downlink data transmission scheduling flexibility.

FIG. 5 is a flowchart of a method for transmitting information about an uplink transmission mode according to an embodiment of the present invention. The method may be applied to the network device in the implementation environment shown in FIG. 1-1. The method for transmitting information about an uplink transmission mode may include the following steps.

Step 501: Determine information about at least two uplink transmission modes, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI.

It should be noted that, a type of the at least two uplink transmission modes may be an uplink transmission mode in the prior art. If a new uplink transmission mode is introduced subsequently, the new uplink transmission mode may still be configured by using a same method.

Step 502: Send the information about the at least two uplink transmission modes to a terminal device.

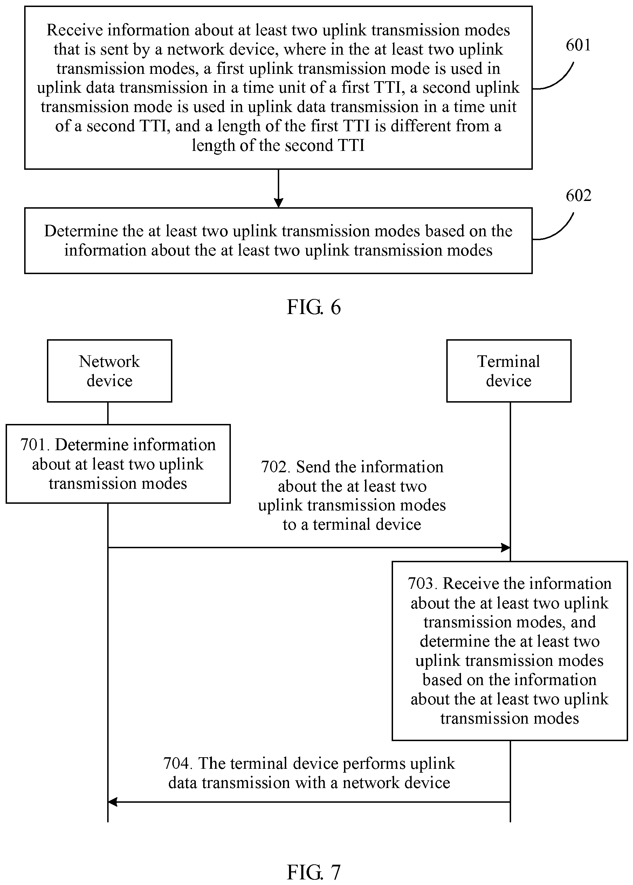

For specific content and implementations of this embodiment of the present invention, refer to the embodiment shown in FIG. 7. Details are not described herein again.

In conclusion, in the method for transmitting information about an uplink transmission mode provided in this embodiment of the present invention, the at least two uplink transmission modes are configured for the terminal device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in a related technology, and improving uplink data transmission scheduling flexibility.

FIG. 6 is a flowchart of a method for transmitting information about an uplink transmission mode according to an embodiment of the present invention. The method may be applied to the terminal device in the implementation environment shown in FIG. 1-1. The method for transmitting information about an uplink transmission mode may include the following steps.

Step 601: Receive information about at least two uplink transmission modes that is sent by a network device, where in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI.

Step 602: Determine the at least two uplink transmission modes based on the information about the at least two uplink transmission modes.

For specific content and implementations of this embodiment of the present invention, refer to the embodiment shown in FIG. 7. Details are not described herein again.

In conclusion, in the method for transmitting information about an uplink transmission mode provided in this embodiment of the present invention, the uplink transmission modes are determined based on the information about the at least two uplink transmission modes that is sent by the network device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in a related technology, and improving uplink data transmission scheduling flexibility.

FIG. 7 is a flowchart of a method for transmitting information about an uplink transmission mode according to an embodiment of the present invention. The method may be applied to the implementation environment shown in FIG. 1-1. The method for transmitting information about an uplink transmission mode may include the following steps.

Step 701: A network device determines information about at least two uplink transmission modes.

When the method for transmitting information about an uplink transmission mode provided in this embodiment of the present invention is used, the network device may first determine the information about the at least two uplink transmission modes. In the at least two uplink transmission modes, a first uplink transmission mode is used in uplink data transmission in a time unit of a first TTI, and a second uplink transmission mode is used in uplink data transmission in a time unit of a second TTI. A length of the first TTI is different from a length of the second TTI. In uplink data transmission, a symbol in a subframe may be a single carrier frequency division multiple access (English: Single Carrier-Frequency Division Multiple Access, SC-FDMA for short) symbol. If an uplink multiple access manner of orthogonal frequency division multiple access (Orthogonal Frequency Division Multiple Access, OFDMA) is introduced into a subsequent technology, an uplink symbol may also be referred to as an OFDM symbol. Both the SC-FDMA symbol and the OFDM symbol are collectively represented as a symbol herein.

In addition, similar to a downlink transmission mode, the at least two uplink transmission modes may further include a third uplink transmission mode. The third uplink transmission mode is used in uplink data transmission in a time unit of a third TTI, a length of the third TTI is different from the length of the first TTI, and the length of the third TTI is different from the length of the second TTI. In other words, the network device may determine at least three uplink transmission modes for a terminal device, and the three uplink transmission modes have different TTI lengths.

Likewise, the second uplink transmission mode in the at least two uplink transmission modes may be further used in uplink data transmission in a time unit of a fourth TTI, and a length of the fourth TTI is different from the length of the second TTI. In other words, in the uplink transmission modes determined by the network device for the terminal device, one uplink transmission mode may be used in uplink data transmission corresponding to two TTIs with different lengths. The two TTIs with different lengths may be two TTIs with lengths less than a length of a conventional TTI; or one TTI may be a TTI with a length less than a length of a conventional TTI, and the other TTI is a conventional TTI. A difference between the length of the fourth TTI and the length of the second TTI may be less than a preset difference. The network device may set one uplink transmission mode to be corresponding to a plurality of TTIs with slightly different lengths. Because the lengths of the TTIs are slightly different, a relatively appropriate period of a measurement reference signal may be set, without causing extremely high measurement reference signal overheads.

It should be noted that, types of the uplink transmission modes may include a TM 1 and a TM 2 in uplink transmission modes. Measurement reference signals corresponding to both the TM 1 and the TM 2 may be sounding reference signals (English: Sounding Reference Signal, SRS for short). Different from the downlink transmission mode, in the uplink transmission mode, the network device measures CSI of an uplink channel based on a measurement reference signal (the measurement reference signal may be sent by the terminal device), instead of measuring the CSI by the terminal device. The network device may determine MCS indication information for the terminal device based on the CSI, and then send the MCS indication information to the terminal device. The MCS indication information is used to indicate a modulation and coding scheme used for an uplink physical channel (for example, a physical uplink shared channel (English: Physical Uplink Shared Channel, PUSCH for short)). The network device may send the MCS indication information to the terminal device by using a channel such as a physical uplink control channel (English: Physical Uplink Control Channel, PUCCH for short), or send the MCS indication information to the terminal device by using physical layer signaling, MAC layer signaling, or RRC signaling, provided that a sending moment of the MCS indication information is earlier than uplink data transmission performed between the terminal device and the network device. No other limitations are imposed in this embodiment of the present invention.

For uplink data transmission, if one uplink transmission mode supports data transmission of four transmission layers, for one uplink transmission mode configured in a related technology, the network device needs to separately measure CSI for the four transmission layers by using measurement reference signals. However, in the method provided in this embodiment of the present invention, the network device configures different transmission modes for uplink data transmission corresponding to TTIs with different lengths. A plurality of transmission layers may be shared by the uplink data transmission modes corresponding to the TTIs with different lengths. For example, the first uplink transmission mode occupies two transmission layers, and the second uplink transmission mode occupies two transmission layers. In this case, the network device may measure CSI once for each transmission mode by using a measurement reference signal. Therefore, the network device needs to measure CSI only twice in total, and measurement reference signal overheads are reduced.

Step 702: The network device sends the information about the at least two uplink transmission modes to a terminal device.

After determining the information about the at least two uplink transmission modes, the network device may send the information about the at least two uplink transmission modes to the terminal device.

Optionally, the network device may send the information about the at least two uplink transmission modes to the terminal device by using physical layer signaling, MAC layer signaling, or RRC signaling.

Step 703: The terminal device receives the information about the at least two uplink transmission modes, and determines the at least two uplink transmission modes based on the information about the at least two uplink transmission modes.

After obtaining the information about the at least two uplink transmission modes that is sent by the network device, the terminal device may determine the at least two uplink transmission modes based on the information about the at least two uplink transmission modes.

Step 704: The terminal device performs uplink data transmission with the network device.

After determining the at least two uplink transmission modes, the terminal device may perform uplink data transmission based on the at least two uplink transmission modes, to send uplink data to the network device. Optionally, the terminal device may perform uplink data transmission in the time unit of the first TTI based on the first uplink transmission mode, and perform uplink data transmission in the time unit of the second TTI based on the second uplink transmission mode.

In conclusion, in the method for transmitting information about an uplink transmission mode provided in this embodiment of the present invention, the at least two uplink transmission modes are configured for the terminal device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in the related technology, and improving uplink data transmission scheduling flexibility.

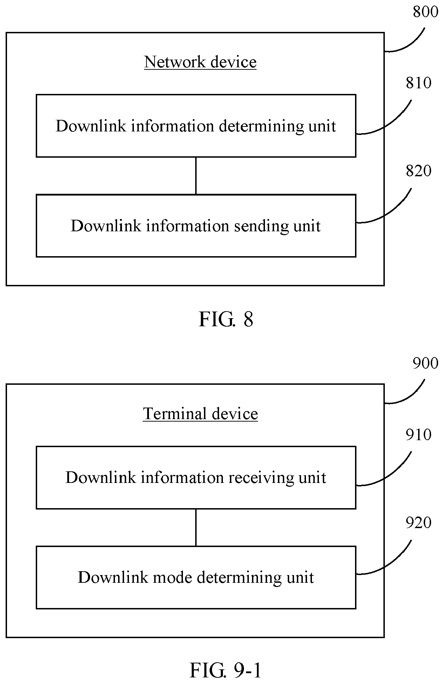

FIG. 8 is a block diagram of a network device according to an embodiment of the present invention. The network device can be configured to implement a procedure implemented by the network device in the embodiment shown in FIG. 4-1. The network device 800 includes a downlink information determining unit 810 and a downlink information sending unit 820.

The downlink information determining unit 810 is configured to determine information about at least two downlink transmission modes. In the at least two downlink transmission modes, a first downlink transmission mode is used in downlink data transmission in a time unit of a first transmission time interval TTI, and a second downlink transmission mode is used in downlink data transmission in a time unit of a second TTI. A length of the first TTI is different from a length of the second TTI. The unit can be configured to perform step 401 in the embodiment shown in FIG. 4-1. A function of the unit can be implemented by using a processor.

Optionally, the at least two downlink transmission modes may include at least one downlink transmission mode corresponding to a time unit of a conventional TTI, so that backward compatibility of the method for transmitting information about a downlink transmission mode provided in the embodiments of the present invention can be improved.

In an LTE system or an LTE-A system, types of the downlink transmission modes may include 10 types: a TM 1 to a TM 10. Measurement reference signals corresponding to the TM 1 to the TM 8 are usually CRSs, a measurement reference signal corresponding to the TM 9 is usually a CSI-RS, and a measurement reference signal corresponding to the TM 10 is usually a CSI process. One CSI process includes a non-zero power CSI-RS and a CSI-IM. In the TM 1 to the TM 10, the TM 1 and the TM 2 have relatively high reliability, and there are relatively large quantities of transmission layers in the TM 9 and the TM 10.

The LTE system or the LTE-A system is used to describe several optional manners of setting types of transmission modes. For example, the length of the second TTI is 1 ms, and the length of the first TTI is less than the length of the second TTI. The types of the first downlink transmission mode and the second downlink transmission mode may be set in the following three manners:

Manner 1: A type of the second downlink transmission mode is the TM 1 or the TM 2, and a type of the first downlink transmission mode is the TM 9 or the TM 10.

In the LTE system or the LTE-A system, 1 ms is a length of a conventional TTI, and a downlink data transmission mode corresponding to a time unit of 1 ms is usually used as a fallback transmission mode (the fallback mode is a transmission mode used in a case of poor network performance). Therefore, reliability of the second downlink transmission mode can be improved by setting the second transmission mode corresponding to the time unit of 1 ms to the TM 1 and the TM 2 with relatively high reliability. In addition, there are a relatively large quantity of transmission layers in the TM 9 or the TM 10, and a throughput (a data volume of data successfully transmitted in a time unit by a network, a device, a port, a virtual circuit, or another facility) of data transmission between the network device and a terminal device can be increased by setting the first downlink transmission mode to the TM 9 or the TM 10.

Manner 2: A type of the second downlink transmission mode is the TM 9 or the TM 10, and a type of the first downlink transmission mode is any one of the TM 1 to the TM 8.

Measurement reference signals corresponding to the TM 1 to the TM 8 are CRSs. Because the CRS is sent in each subframe, the terminal device can perform rapid measurement and reporting. This is advantageous to short-delay service transmission. In addition, a throughput of data transmission between the network device and the terminal device can be increased by setting the type of the second downlink transmission mode to the TM 9 or the TM 10.

Manner 3: A type of the second downlink transmission mode is the TM 1 or the TM 2, and a type of the first downlink transmission mode is any one of the TM 1 to the TM 8.

Reliability of the second downlink transmission mode can be improved by setting the type of the second downlink transmission mode to the TM 1 or the TM 2. Setting the type of the first downlink transmission mode to any one of the TM 1 to the TM 8 is advantageous to short-delay service transmission.

Optionally, the at least two downlink transmission modes further include a third downlink transmission mode. The third downlink transmission mode is used in downlink data transmission in a time unit of a third TTI, a length of the third TTI is different from the length of the first TTI, and the length of the third TTI is different from the length of the second TTI. In other words, the network device may determine at least three downlink transmission modes for the terminal device, and the three downlink transmission modes have different TTI lengths. For example, in the LTE system and the LTE-A system, the first TTI has a length of three symbols, the second TTI is a conventional TTI with a length of 1 ms, and the third TTI has a length of two symbols. In addition, the at least two downlink transmission modes may further include more downlink transmission modes. For a case of the more downlink transmission modes, refer to the first, second, or third downlink transmission mode. Details are not described herein again.

Optionally, the second downlink transmission mode in the at least two downlink transmission modes is further used in downlink data transmission in a time unit of a fourth TTI, and a length of the fourth TTI is different from the length of the second TTI. In other words, in the downlink transmission modes determined by the network device for the terminal device, one downlink transmission mode may be used in downlink data transmission corresponding to two TTIs with different lengths. The two TTIs with different lengths may be two TTIs with lengths less than a length of a conventional TTI; or one TTI may be a TTI with a length less than a length of a conventional TTI, and the other TTI is a conventional TTI. For example, the length of the fourth TTI is 1 ms, and the length of the second TTI is 0.5 ms. In addition, any one of the downlink transmission modes determined by the network device for the terminal device may be used in downlink transmission corresponding to three or more TTIs with different lengths. This is not limited in this embodiment of the present invention. When the network device determines a downlink transmission mode for the terminal device, it may be considered whether the terminal device supports a short TTI, and a quantity of TTIs with different lengths in the transmission mode is determined when the terminal device can support the short TTI.

The network device provided in this embodiment of the present invention sets different downlink transmission modes for TTIs with different lengths. In each downlink transmission mode, a period of a measurement reference signal may be set based on a length of a TTI. For example, a period of a CSI-RS in downlink data transmission corresponding to a TTI with a length of 1 ms may be set to five TTIs, and a period of a CSI-RS in downlink data transmission corresponding to a TTI with a length of 1 ms may be set to 10 TTIs. In this way, the period of the CSI-RS can meet a requirement on CSI in downlink data transmission corresponding to TTIs with different lengths, thereby resolving a problem in a related technology.

Optionally, when the second downlink transmission mode is used in downlink data transmission in time units of the second TTI and the fourth TTI, a difference between the length of the fourth TTI and the length of the second TTI may be less than a preset difference. In other words, the network device may set one transmission mode to be corresponding to a plurality of TTIs with slightly different lengths. Because the lengths of the TTIs are slightly different, a relatively appropriate period of a measurement reference signal may be set, without causing extremely high measurement reference signal overheads. For example, the preset difference may be 0.2 ms, and the second downlink transmission mode may be used in downlink data transmission corresponding to TTIs with lengths of 0.5 ms and 0.6 ms.

Optionally, each of the at least two downlink transmission modes is corresponding to a measurement reference signal, and the measurement reference signal includes any one of a CSI-RS, a CRS, and a CSI process.

Optionally, any one of the at least two downlink transmission modes is corresponding to an antenna port of at least one measurement reference signal.

A port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports; or
a port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports; or
a port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

The downlink information sending unit 820 is configured to send the information about the at least two downlink transmission modes to the terminal device. The unit can be configured to perform step 402 in the embodiment shown in FIG. 4-1. The downlink information sending unit 820 may be specifically configured to send the information about the at least two downlink transmission modes to the terminal device by using physical layer signaling, MAC layer signaling, or RRC signaling. A function of the unit can be implemented by using a network interface.

The network device provided in this embodiment of the present invention may separately configure antenna ports for TTIs with different lengths. In other words, the network device may adjust, based on a case, configuration manners of antenna ports of measurement reference signals corresponding to different downlink transmission modes, so as to reduce communication resources. However, in the related technology, because one downlink transmission mode is usually configured for TTIs with different lengths, configuration statuses of antenna ports of measurement reference signals corresponding to downlink data transmission in a case of the TTIs with different lengths are the same, and the configuration status of the antenna port cannot be adjusted based on a case. Consequently, communication resources may be wasted.

In conclusion, the network device provided in this embodiment of the present invention configures the at least two downlink transmission modes for the terminal device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in the related technology, and improving downlink data transmission scheduling flexibility.

FIG. 9-1 is a block diagram of a terminal device according to an embodiment of the present invention. The terminal device can be configured to implement a procedure implemented by the terminal device in the embodiment shown in FIG. 4-1. The terminal device 900 includes a downlink information receiving unit 910 and a downlink mode determining unit 920.

The downlink information receiving unit 910 is configured to receive information about at least two downlink transmission modes that is sent by a network device. In the at least two downlink transmission modes, a first downlink transmission mode is used in downlink data transmission in a time unit of a first TTI, and a second downlink transmission mode is used in downlink data transmission in a time unit of a second TTI. A length of the first TTI is different from a length of the second TTI. A function of the unit can be implemented by using a receiver.

The downlink mode determining unit 920 is configured to determine the at least two downlink transmission modes based on the information about the at least two downlink transmission modes. A function of the unit can be implemented by using a processor.

The downlink information receiving unit 910 and the downlink mode determining unit 920 can be configured to perform step 403 in the embodiment shown in FIG. 4-1.

Optionally, the at least two downlink transmission modes further include a third downlink transmission mode.

The third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

Optionally, each of the at least two downlink transmission modes is corresponding to a measurement reference signal. After determining the at least two downlink transmission modes, the terminal device may obtain CSI through measurement based on measurement reference signals corresponding to the at least two downlink transmission modes. The CSI may include at least one of a CQI, a PMI, and an RI. A process of obtaining the CSI through measurement based on the measurement reference signals may be as follows: 1. The terminal device obtains, by estimating the measurement reference signals, channel information used to measure the CSI. 2. The terminal device obtains, based on the channel information obtained through estimation, an optimum RI and/or PMI, and an SINR corresponding to the RI and/or the PMI. 3. The terminal device quantizes the calculated SINR into a 4-bit (bit) CQI.

The terminal device may report at least one of the CQI, the PMI, and the RI to the network device.

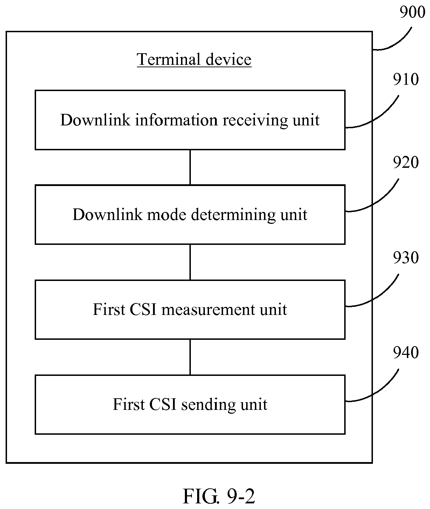

As shown in FIG. 9-2, the terminal device 900 further includes a first CSI measurement unit 930 and a first CSI sending unit 940.

The first CSI measurement unit 930 is configured to: obtain first CSI through measurement based on a measurement reference signal corresponding to the first downlink transmission mode, and obtain second CSI through measurement based on a measurement reference signal corresponding to the second downlink transmission mode. The unit can be configured to perform step 4041 in the embodiment shown in FIG. 4-1. A function of the unit can be implemented by analyzing, by the processor, a measurement reference signal received by the receiver.

The first CSI sending unit 940 is configured to send the first CSI and the second CSI to the network device. The unit can be configured to perform step 4042 in the embodiment shown in FIG. 4-1. A function of the unit can be implemented by using a transmitter.

Optionally, each of the at least two downlink transmission modes is corresponding to a measurement reference signal.

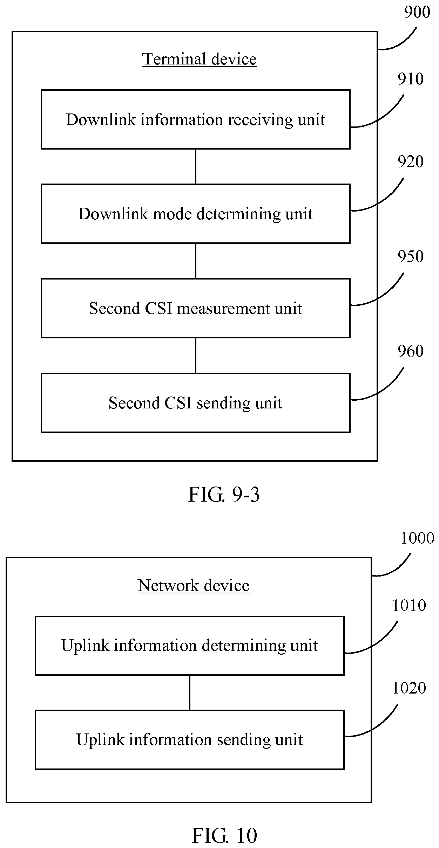

As shown in FIG. 9-3, the terminal device 900 further includes a second CSI measurement unit 950 and a second CSI sending unit 960.

The second CSI measurement unit 950 is configured to obtain the first CSI through measurement based on the measurement reference signal corresponding to the first downlink transmission mode. The unit can be configured to perform step 4043 in the embodiment shown in FIG. 4-1. A function of the unit can be implemented by analyzing, by the processor, the measurement reference signal received by the receiver.

The second CSI sending unit 960 is configured to send the first CSI to the network device. The unit can be configured to perform step 4044 in the embodiment shown in FIG. 4-1. A function of the unit can be implemented by using the transmitter.

In conclusion, the terminal device provided in this embodiment of the present invention determines the downlink transmission modes based on the information about the at least two downlink transmission modes that is sent by the network device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in a related technology, and improving downlink data transmission scheduling flexibility.

FIG. 10 is a block diagram of a network device according to an embodiment of the present invention. The network device can be configured to implement a procedure implemented by the network device in the embodiment shown in FIG. 7. The network device 1000 includes an uplink information determining unit 1010 and an uplink information sending unit 1020.

The uplink information determining unit 1010 is configured to determine information about at least two uplink transmission modes. In the at least two uplink transmission modes, a first uplink transmission mode is used in uplink data transmission in a time unit of a first TTI, and a second uplink transmission mode is used in uplink data transmission in a time unit of a second TTI. A length of the first TTI is different from a length of the second TTI. The unit can be configured to perform step 701 in the embodiment shown in FIG. 7. A function of the unit can be implemented by using a processor.

Similar to a downlink transmission mode, the at least two uplink transmission modes may further include a third uplink transmission mode. The third uplink transmission mode is used in uplink data transmission in a time unit of a third TTI, a length of the third TTI is different from the length of the first TTI, and the length of the third TTI is different from the length of the second TTI. In other words, the network device may determine at least three uplink transmission modes for a terminal device, and the three uplink transmission modes have different TTI lengths.

Likewise, the second uplink transmission mode in the at least two uplink transmission modes may be further used in uplink data transmission in a time unit of a fourth TTI, and a length of the fourth TTI is different from the length of the second TTI. In other words, in the uplink transmission modes determined by the network device for the terminal device, one uplink transmission mode may be used in uplink data transmission corresponding to two TTIs with different lengths. The two TTIs with different lengths may be two TTIs with lengths less than a length of a conventional TTI; or one TTI may be a TTI with a length less than a length of a conventional TTI, and the other TTI is a conventional TTI.

The uplink information sending unit 1020 is configured to send the information about the at least two uplink transmission modes to the terminal device. The unit can be configured to perform step 702 in the embodiment shown in FIG. 7. A function of the unit can be implemented by using a network interface.

Optionally, the uplink information sending unit 1020 is specifically configured to send the information about the at least two uplink transmission modes to the terminal device by using physical layer signaling or radio resource control signaling.

In conclusion, the network device provided in this embodiment of the present invention configures the at least two uplink transmission modes for the terminal device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in a related technology, and improving uplink data transmission scheduling flexibility.

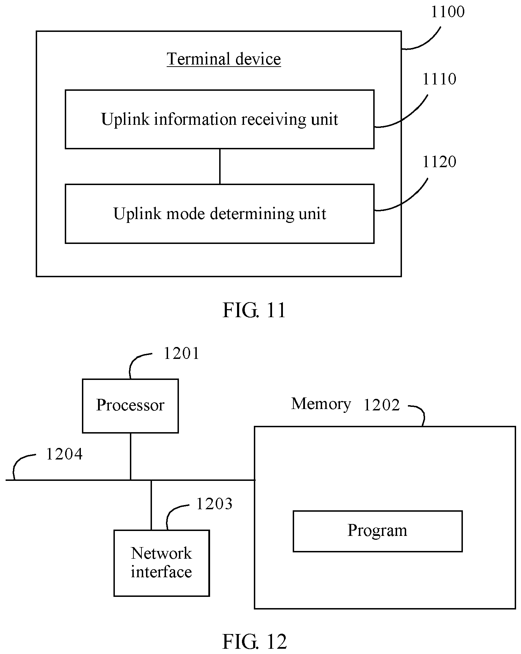

FIG. 11 is a block diagram of a terminal device according to an embodiment of the present invention. The terminal device can be configured to implement a procedure implemented by the terminal device in the embodiment shown in FIG. 7. The terminal device 1100 includes an uplink information receiving unit 1110 and an uplink mode determining unit 1120.

The uplink information receiving unit 1110 is configured to receive information about at least two uplink transmission modes that is sent by a network device. In the at least two uplink transmission modes, a first uplink transmission mode is used in uplink data transmission in a time unit of a first TTI, and a second uplink transmission mode is used in uplink data transmission in a time unit of a second TTI. A length of the first TTI is different from a length of the second TTI. A function of the unit can be implemented by using a receiver.

The uplink mode determining unit 1120 is configured to determine the at least two uplink transmission modes based on the information about the at least two uplink transmission modes. A function of the unit can be implemented by using a processor.

In conclusion, the terminal device provided in this embodiment of the present invention determines the uplink transmission modes based on the information about the at least two uplink transmission modes that is sent by the network device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in a related technology, and improving uplink data transmission scheduling flexibility.

FIG. 12 is a schematic diagram of another network device according to an embodiment of the present invention. The network device includes a processor 1201, a memory 1202, a network interface 1203, and a bus 1204. The bus 1204 is configured to connect the processor 1201, the memory 1202, and the network interface 1203. The processor 1201 is configured to execute a program stored in the memory 1202.

The processor 1201 is configured to determine information about at least two downlink transmission modes. In the at least two downlink transmission modes, a first downlink transmission mode is used in downlink data transmission in a time unit of a first transmission time interval TTI, and a second downlink transmission mode is used in downlink data transmission in a time unit of a second TTI. A length of the first TTI is different from a length of the second TTI.

The network interface 1203 is configured to send the information about the at least two downlink transmission modes to a terminal device.

Optionally, the at least two downlink transmission modes further include a third downlink transmission mode.

The third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, and a length of the fourth TTI is different from the length of the second TTI.

Optionally, a difference between the length of the fourth TTI and the length of the second TTI is less than a preset difference.

Optionally, each of the at least two downlink transmission modes is corresponding to a measurement reference signal, and the measurement reference signal includes any one of a channel state information-reference signal CSI-RS, a common reference signal CRS, and a channel state information process CSI process.

Optionally, the length of the second TTI is 1 millisecond, the length of the first TTI is less than the length of the second TTI, and types of the downlink transmission modes include transmission modes TM 1 to TM 10.

A type of the second downlink transmission mode is the TM 1 or the TM 2, and a type of the first downlink transmission mode is the TM 9 or the TM 10; or
a type of the second downlink transmission mode is the TM 9 or the TM 10, and a type of the first downlink transmission mode is any one of the TM 1 to the TM 8; or
a type of the second downlink transmission mode is the TM 1 or the TM 2, and a type of the first downlink transmission mode is any one of the TM 1 to the TM 8.

Optionally, any one of the at least two downlink transmission modes is corresponding to an antenna port of at least one measurement reference signal.

A port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports; or
a port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports; or a port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

The network interface 1203 is configured to send the information about the at least two downlink transmission modes to the terminal device by using physical layer signaling or radio resource control signaling.

For specific content and implementations of this embodiment of the present invention, refer to the embodiment shown in FIG. 4-1. Details are not described herein again.

In conclusion, the network device provided in this embodiment of the present invention configures the at least two downlink transmission modes for the terminal device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in a related technology, and improving downlink data transmission scheduling flexibility.

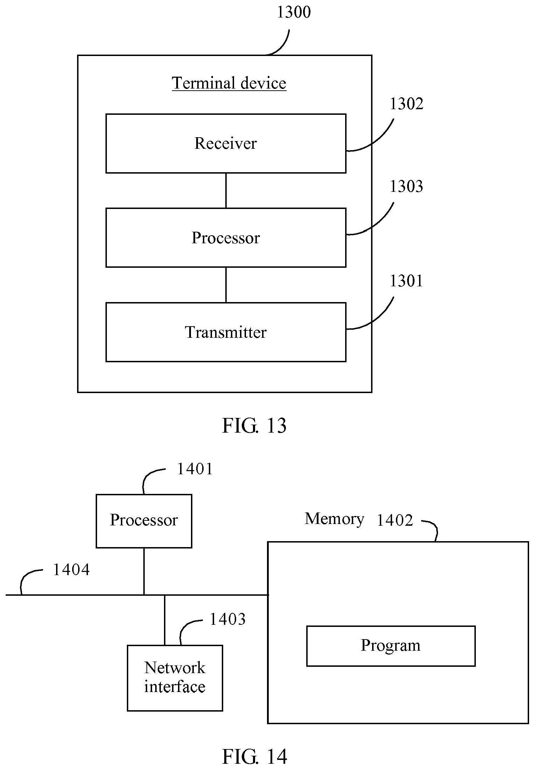

FIG. 13 is a schematic diagram of another terminal device according to an embodiment of the present invention. The terminal device 1300 includes a transmitter 1301, a receiver 1302, and a processor 1303.

The receiver 1302 is configured to receive information about at least two downlink transmission modes that is sent by a network device. In the at least two downlink transmission modes, a first downlink transmission mode is used in downlink data transmission in a time unit of a first TTI, and a second downlink transmission mode is used in downlink data transmission in a time unit of a second TTI. A length of the first TTI is different from a length of the second TTI.

The processor 1303 is configured to determine the at least two downlink transmission modes based on the information about the at least two downlink transmission modes.

Optionally, the at least two downlink transmission modes further include a third downlink transmission mode.

The third downlink transmission mode is used in downlink data transmission in a time unit of a third TTI, a length of the third TTI is different from the length of the first TTI, and the length of the third TTI is different from the length of the second TTI.

Optionally, the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

Optionally, each of the at least two downlink transmission modes is corresponding to a measurement reference signal.

The processor 1303 is configured to: obtain first CSI through measurement based on a measurement reference signal corresponding to the first downlink transmission mode, and obtain second CSI through measurement based on a measurement reference signal corresponding to the second downlink transmission mode.

The transmitter 1301 is configured to send the first CSI and the second CSI to the network device.

Optionally, each of the at least two downlink transmission modes is corresponding to a measurement reference signal.

The processor 1303 is configured to obtain the first CSI through measurement based on the measurement reference signal corresponding to the first downlink transmission mode.

The transmitter 1301 is configured to send the first CSI to the network device.

For specific content and implementations of this embodiment of the present invention, refer to the embodiment shown in FIG. 4-1. Details are not described herein again.

In conclusion, the terminal device provided in this embodiment of the present invention determines the downlink transmission modes based on the information about the at least two downlink transmission modes that is sent by the network device, and the first downlink transmission mode and the second downlink transmission mode in the at least two downlink transmission modes are corresponding to TTIs with different lengths, thereby resolving a problem of low flexibility when an eNB performs PDSCH transmission scheduling in a case of TTIs with different lengths in a related technology, and improving downlink data transmission scheduling flexibility.

FIG. 14 is a schematic diagram of another network device according to an embodiment of the present invention. The network device includes a processor 1401, a memory 1402, a network interface 1403, and a bus 1404. The bus 1404 is configured to connect the processor 1401, the memory 1402, and the network interface 1403. The processor 1401 is configured to execute a program stored in the memory 1402.

The processor 1401 is configured to determine information about at least two uplink transmission modes. In the at least two uplink transmission modes, a first uplink transmission mode is used in uplink data transmission in a time unit of a first TTI, and a second uplink transmission mode is used in uplink data transmission in a time unit of a second TTI. A length of the first TTI is different from a length of the second TTI.

The network interface 1403 is configured to send the information about the at least two uplink transmission modes to a terminal device.

The network interface 1403 is configured to send the information about the at least two uplink transmission modes to the terminal device by using physical layer signaling or radio resource control signaling.

For specific content and implementations of this embodiment of the present invention, refer to the embodiment shown in FIG. 7. Details are not described herein again.

In conclusion, the network device provided in this embodiment of the present invention configures the at least two uplink transmission modes for the terminal device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in a related technology, and improving uplink data transmission scheduling flexibility.

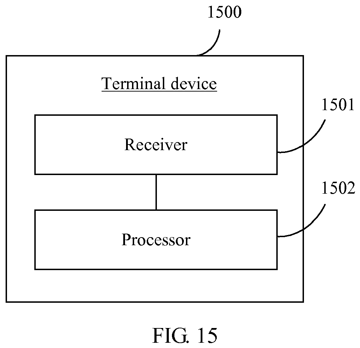

FIG. 15 is a schematic diagram of another terminal device according to an embodiment of the present invention. The terminal device 1500 includes a receiver 1501 and a processor 1502.

The receiver 1501 is configured to receive information about at least two uplink transmission modes that is sent by a network device. In the at least two uplink transmission modes, a first uplink transmission mode is used in uplink data transmission in a time unit of a first TTI, and a second uplink transmission mode is used in uplink data transmission in a time unit of a second TTI. A length of the first TTI is different from a length of the second TTI.

The processor 1502 is configured to determine the at least two uplink transmission modes based on the information about the at least two uplink transmission modes.

For specific content and implementations of this embodiment of the present invention, refer to the embodiment shown in FIG. 7. Details are not described herein again.

In conclusion, the terminal device provided in this embodiment of the present invention determines the uplink transmission modes based on the information about the at least two uplink transmission modes that is sent by the network device, and the first uplink transmission mode and the second uplink transmission mode in the at least two uplink transmission modes are corresponding to TTIs with different lengths, thereby resolving a problem of low flexibility when an eNB performs PUSCH transmission scheduling in a case of TTIs with different lengths in a related technology, and improving uplink data transmission scheduling flexibility.

An embodiment of the present invention provides a system for transmitting information about a transmission mode. The system includes a network device and a terminal device.

The network device includes the network device shown in FIG. 8 or FIG. 12. The network device can be configured to implement a procedure implemented by the network device in the embodiment shown in FIG. 4-1.

The terminal device includes the terminal device shown in FIG. 9-1, FIG. 9-2, FIG. 9-3, or FIG. 13. The terminal device can be configured to implement a procedure implemented by the terminal device in the embodiment shown in FIG. 4-1.

An embodiment of the present invention provides a system for transmitting information about a transmission mode. The system includes a network device and a terminal device.

The network device includes the network device shown in FIG. 10 or FIG. 14. The network device can be configured to implement a procedure implemented by the network device in the embodiment shown in FIG. 7.

The terminal device includes the terminal device shown in FIG. 11 or FIG. 15. The terminal device can be configured to implement a procedure implemented by the terminal device in the embodiment shown in FIG. 7.

The term "at least one of A and B" in the present invention describes only an association relationship for describing associated objects and represents that three relationships may exist. For example, at least one of A and B may represent the following three cases: Only A exists, both A and B exist, and only B exists. Likewise, "at least one of A, B, and C" represents that seven relationships may exist, and represents the following seven cases: Only A exists; only B exists; only C exists; both A and B exist; both A and C exist; both C and B exist; and A, B, and C exist. Likewise, "at least one of A, B, C, and D" represents that fifteen relationships may exist, and represents the following fifteen cases: Only A exists; only B exists; only C exists; only D exists; both A and B exist; both A and C exist; both A and D exist; both C and B exist; both D and B exist; both C and D exist; A, B, and C exist; A, B, and D exist; A, C, and D exist; B, C, and D exist; and A, B, C, and D exist.

The term "and/or" in the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Persons skilled in the art may clearly understand that, for convenience and brevity of description, for specific working processes of the foregoing described devices and units, refer to corresponding processes in the foregoing method embodiments. Details are not described herein again.

Persons of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely preferred embodiments of the present invention, but are not intended to limit the present invention. Any modification, equivalent replacement, and improvement made without departing from the spirit and principle of the present invention shall fall within the protection scope of the present invention.

## Claims

1. A method for transmitting information about a transmission mode, wherein the method comprises:
determining information about at least two downlink transmission modes, wherein in the at least two downlink transmission modes, a first downlink transmission mode is used in downlink data transmission in a time unit of a first transmission time interval TTI, a second downlink transmission mode is used in downlink data transmission in a time unit of a second TTI, and a length of the first TTI is different from a length of the second TTI; and
sending the information about the at least two downlink transmission modes to a terminal device.

2. The method according to claim 1, wherein the at least two downlink transmission modes further comprise a third downlink transmission mode; and
the third downlink transmission mode is used in downlink data transmission in a time unit of a third TTI, a length of the third TTI is different from the length of the first TTI, and the length of the third TTI is different from the length of the second TTI.

3. The method according to claim 1 or 2, wherein the second downlink transmission mode in the at least two downlink transmission modes is further used in downlink data transmission in a time unit of a fourth TTI, and a length of the fourth TTI is different from the length of the second TTI.

4. The method according to claim 3, wherein a difference between the length of the fourth TTI and the length of the second TTI is less than a preset difference.

5. The method according to any one of claims 1 to 4, wherein each of the at least two downlink transmission modes is corresponding to a measurement reference signal, and the measurement reference signal comprises any one of a channel state information-reference signal CSI-RS, a common reference signal CRS, and a channel state information process CSI process.

6. The method according to any one of claims 1 to 5, wherein the length of the second TTI is 1 millisecond, the length of the first TTI is less than the length of the second TTI, and types of the downlink transmission modes comprise transmission modes TM 1 to TM 10; and
a type of the second downlink transmission mode is the TM 1 or the TM 2, and a type of the first downlink transmission mode is the TM 9 or the TM 10; or
a type of the second downlink transmission mode is the TM 9 or the TM 10, and a type of the first downlink transmission mode is any one of the TM 1 to the TM 8; or
a type of the second downlink transmission mode is the TM 1 or the TM 2, and a type of the first downlink transmission mode is any one of the TM 1 to the TM 8.

7. The method according to any one of claims 1 to 6, wherein any one of the at least two downlink transmission modes is corresponding to an antenna port of at least one measurement reference signal; and
a port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports; or
a port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports; or
a port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

8. The method according to any one of claims 1 to 7, wherein the sending the information about the at least two downlink transmission modes to a terminal device comprises:
sending the information about the at least two downlink transmission modes to the terminal device by using physical layer signaling or radio resource control signaling.

9. A method for transmitting information about a transmission mode, wherein the method comprises:
receiving information about at least two downlink transmission modes that is sent by a network device, wherein in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI; and
determining the at least two downlink transmission modes based on the information about the at least two downlink transmission modes.

10. The method according to claim 9, wherein the at least two downlink transmission modes further comprise a third downlink transmission mode; and
the third downlink transmission mode is used in downlink data transmission in a time unit of a third TTI, a length of the third TTI is different from the length of the first TTI, and the length of the third TTI is different from the length of the second TTI.

11. The method according to claim 9 or 10, wherein
the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

12. The method according to any one of claims 9 to 11, wherein each of the at least two downlink transmission modes is corresponding to a measurement reference signal; and
after the determining the at least two downlink transmission modes based on the information about the at least two downlink transmission modes, the method further comprises:
obtaining first CSI through measurement based on a measurement reference signal corresponding to the first downlink transmission mode, and obtaining second CSI through measurement based on a measurement reference signal corresponding to the second downlink transmission mode; and
sending the first CSI and the second CSI to the network device.

13. The method according to any one of claims 9 to 12, wherein each of the at least two downlink transmission modes is corresponding to a measurement reference signal; and
after the determining the at least two downlink transmission modes based on the information about the at least two downlink transmission modes, the method further comprises:
obtaining the first CSI through measurement based on the measurement reference signal corresponding to the first downlink transmission mode; and
sending the first CSI to the network device.

14. A method for transmitting information about a transmission mode, wherein the method comprises:
determining information about at least two uplink transmission modes, wherein in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
sending the information about the at least two uplink transmission modes to a terminal device.

15. The method according to claim 14, wherein the sending the information about the at least two uplink transmission modes to a terminal device comprises:
sending the information about the at least two uplink transmission modes to the terminal device by using physical layer signaling or radio resource control signaling.

16. A method for transmitting information about a transmission mode, wherein the method comprises:
receiving information about at least two uplink transmission modes that is sent by a network device, wherein in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
determining the at least two uplink transmission modes based on the information about the at least two uplink transmission modes.

17. A network device, wherein the network device comprises:
a downlink information determining unit, configured to determine information about at least two downlink transmission modes, wherein in the at least two downlink transmission modes, a first downlink transmission mode is used in downlink data transmission in a time unit of a first transmission time interval TTI, a second downlink transmission mode is used in downlink data transmission in a time unit of a second TTI, and a length of the first TTI is different from a length of the second TTI; and
a downlink information sending unit, configured to send the information about the at least two downlink transmission modes to a terminal device.

18. The network device according to claim 17, wherein the at least two downlink transmission modes further comprise a third downlink transmission mode; and
the third downlink transmission mode is used in downlink data transmission in a time unit of a third TTI, a length of the third TTI is different from the length of the first TTI, and the length of the third TTI is different from the length of the second TTI.

19. The network device according to claim 17 or 18, wherein the second downlink transmission mode in the at least two downlink transmission modes is further used in downlink data transmission in a time unit of a fourth TTI, and a length of the fourth TTI is different from the length of the second TTI.

20. The network device according to claim 19, wherein a difference between the length of the fourth TTI and the length of the second TTI is less than a preset difference.

21. The network device according to any one of claims 17 to 20, wherein each of the at least two downlink transmission modes is corresponding to a measurement reference signal, and the measurement reference signal comprises any one of a channel state information-reference signal CSI-RS, a common reference signal CRS, and a channel state information process CSI process.

22. The network device according to any one of claims 17 to 21, wherein the length of the second TTI is 1 millisecond, the length of the first TTI is less than the length of the second TTI, and types of the downlink transmission modes comprise transmission modes TM 1 to TM 10; and
a type of the second downlink transmission mode is the TM 1 or the TM 2, and a type of the first downlink transmission mode is the TM 9 or the TM 10; or
a type of the second downlink transmission mode is the TM 9 or the TM 10, and a type of the first downlink transmission mode is any one of the TM 1 to the TM 8; or
a type of the second downlink transmission mode is the TM 1 or the TM 2, and a type of the first downlink transmission mode is any one of the TM 1 to the TM 8.

23. The network device according to any one of claims 17 to 22, wherein any one of the at least two downlink transmission modes is corresponding to an antenna port of at least one measurement reference signal; and
a port number of an antenna port of a measurement reference signal corresponding to the first downlink transmission mode is different from a port number of an antenna port of a measurement reference signal corresponding to the second downlink transmission mode, and the first downlink transmission mode and the second downlink transmission mode are also corresponding to different quantities of antenna ports; or
a port number of an antenna port of a measurement reference signal corresponding to the first downlink transmission mode is different from a port number of an antenna port of a measurement reference signal corresponding to the second downlink transmission mode, but the first downlink transmission mode and the second downlink transmission mode are corresponding to a same quantity of antenna ports; or
a port number of an antenna port of a measurement reference signal corresponding to the first downlink transmission mode is the same as a port number of an antenna port of a measurement reference signal corresponding to the second downlink transmission mode, and a quantity of antenna ports of the measurement reference signal corresponding to the first downlink transmission mode is different from a quantity of antenna ports of the measurement reference signal corresponding to the second downlink transmission mode.

24. The network device according to any one of claims 17 to 23, wherein
the downlink information sending unit is specifically configured to send the information about the at least two downlink transmission modes to the terminal device by using physical layer signaling or radio resource control signaling.

25. A terminal device, wherein the terminal device comprises:
a downlink information receiving unit, configured to receive information about at least two downlink transmission modes that is sent by a network device, wherein in the at least two downlink transmission modes, a first downlink transmission mode is used in downlink data transmission in a time unit of a first TTI, a second downlink transmission mode is used in downlink data transmission in a time unit of a second TTI, and a length of the first TTI is different from a length of the second TTI; and
a downlink mode determining unit, configured to determine the at least two downlink transmission modes based on the information about the at least two downlink transmission modes.

26. The terminal device according to claim 25, wherein the at least two downlink transmission modes further comprise a third downlink transmission mode; and
the third downlink transmission mode is used in downlink data transmission in a time unit of a third TTI, a length of the third TTI is different from the length of the first TTI, and the length of the third TTI is different from the length of the second TTI.

27. The terminal device according to claim 25 or 26, wherein
the second downlink transmission mode in the at least two downlink transmission modes is further used in downlink data transmission in a time unit of a fourth TTI, a length of the fourth TTI is different from the length of the first TTI, and the length of the fourth TTI is different from the length of the second TTI.

28. The terminal device according to any one of claims 25 to 27, wherein each of the at least two downlink transmission modes is corresponding to a measurement reference signal; and
the terminal device further comprises:
a first CSI measurement unit, configured to: obtain first CSI through measurement based on a measurement reference signal corresponding to the first downlink transmission mode, and obtain second CSI through measurement based on a measurement reference signal corresponding to the second downlink transmission mode; and
a first CSI sending unit, configured to send the first CSI and the second CSI to the network device.

29. The terminal device according to any one of claims 25 to 28, wherein each of the at least two downlink transmission modes is corresponding to a measurement reference signal; and
the terminal device further comprises:
a second CSI measurement unit, configured to obtain the first CSI through measurement based on the measurement reference signal corresponding to the first downlink transmission mode; and
a second CSI sending unit, configured to send the first CSI to the network device.

30. A network device, wherein the network device comprises:
an uplink information determining unit, configured to determine information about at least two uplink transmission modes, wherein in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
an uplink information sending unit, configured to send the information about the at least two uplink transmission modes to a terminal device.

31. The network device according to claim 30, wherein
the uplink information sending unit is specifically configured to send the information about the at least two uplink transmission modes to the terminal device by using physical layer signaling or radio resource control signaling.

32. A terminal device, wherein the terminal device comprises:
an uplink information receiving unit, configured to receive information about at least two uplink transmission modes that is sent by a network device, wherein in the at least two uplink transmission modes, a first uplink transmission mode is used in uplink data transmission in a time unit of a first TTI, a second uplink transmission mode is used in uplink data transmission in a time unit of a second TTI, and a length of the first TTI is different from a length of the second TTI; and
an uplink mode determining unit, configured to determine the at least two uplink transmission modes based on the information about the at least two uplink transmission modes.

33. A system for transmitting information about a transmission mode, wherein the system comprises a network device and a terminal device, wherein
the network device comprises the network device according to any one of claims 17 to 24; and
the terminal device comprises the terminal device according to any one of claims 25 to 29.

34. A system for transmitting information about a transmission mode, wherein the system comprises a network device and a terminal device, wherein
the network device comprises the network device according to claim 30 or 31; and
the terminal device comprises the terminal device according to claim 32.
